# EUROPEAN PATENT SPECIFICATION

(11) **EP 3 950 492 B1**
(45) Date of publication and mention of the grant of the patent: **23.04.2025**
(21) Application number: 20784293.1
(22) Date of filing: 11.03.2020
(51) Int. Cl.: G05D 1/00, G01C 21/20, B64U 10/13, B64U 101/30, G08G 5/00

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 02.04.2019 JP 2019070464
(43) Date of publication of application: 09.02.2022
(73) Proprietor: Sony Group Corporation, Tokyo 108-0075 (JP)
(72) Inventor: TSURUMI, Shingo, Tokyo 108-0075 (JP)
(74) Representative: D Young & Co LLP
(86) International application number: PCT/JP2020/010558
(87) International publication number: WO 2020/203126

(56) References cited:
- WO-A1-2017/023411
- WO-A1-2018/020659
- WO-A1-2018/214079
- JP-A- 2012 202 879
- JP-A- 2018 110 352
- JP-A- 2018 110 352
- JP-A- 2018 160 228
- JP-A- 2018 160 228
- JP-A- 2018 173 992
- JP-A- 2018 174 002
- US-A1- 2007 018 052
- US-A1- 2016 306 351
- US-A1- 2017 076 612
- US-A1- 2017 200 311

## Description

### Field

The present disclosure relates to an information processing apparatus, an information processing method, and a program.

### Background

In recent years, a moving body operated using a steering device or the like, such as a drone, has been used. For example, an image of a landscape captured in the sky using a drone equipped with a camera is used.

For example, Patent Literature 1 describes a technology for efficiently transferring an image by switching a mode from an image capturing mode to an image transfer mode when a pre-defined mode switching condition occurs.

### Citation List

### Patent Literature

Patent Literature 1: JP 2019-16869 A
JP 2018 110352 A teaches a flight system including a flight control device for maneuvering a flight device, an information processing method executed by a flight control device, a program executed in a flight control device, and a flight device and a flight control device.
US 2016/306351 A1 relates to the field of unmanned aerial vehicles (UAVs) such as quadcopters.
WO 2018/214079 A1 discloses navigation application technologies, and in particular, a navigation processing method, apparatus, and control device.
WO 2017/023411 A1 is directed to the planning of flight paths of a physical aircraft vehicle.
US 2017/200311 A1 relates to a method and system for camera (or sensor) angle visualization for objects of interest that are to be photographed.
US 2017/076612 A1 is directed to an information processing device, information processing method, program, and imaging system for setting a flight route for a flying object.
JP 2018 160228 A discloses a route generation device including, acquisition means, first generation means, reception means, and second generation means. The acquisition means acquires an image including a first object as a subject. The first generation means generates three-dimensional data by use of the distance image. The reception means receives first region information for specifying a first region including at least part of the first object on the basis of the three-dimensional data. The second generation means generates route data by use of the first region information and the three-dimensional data.

### Summary

### Technical Problem

As a method of controlling a movement of a moving body such as a drone, other than a method in which the movement of the moving body is controlled by a user using a steering device, a method in which a route for the moving body to move along is set in advance such that the moving body moves along the preset route may be considered. In this case, for example, it may be considered to set a movement route of the moving body on a map.

However, in the method of setting the route of the moving body on the two-dimensional map, in a case where the moving body moves three-dimensionally, it is difficult to intuitively set the movement of the moving body. The technology described in Patent Literature 1 is not intended to intuitively generate movement information for controlling a movement of a moving body such as a drone.

Therefore, the present disclosure proposes a new and improved information processing apparatus, information processing method, and program making it possible to intuitively generate information for moving a moving body. Solution to Problem

The invention is defined by the appended claims.

### Brief Description of Drawings

FIG. 1 is a diagram illustrating a configuration of an information processing system according to an embodiment of the present disclosure.
FIG. 2 is a functional block diagram illustrating a configuration of a user terminal according to an embodiment of the present disclosure.
FIG. 3 is a functional block diagram illustrating a configuration of a processing unit.
FIG. 4 is a diagram illustrating a state in which a user steers a moving body to image a tower and a forest.
FIG. 5 is a diagram illustrating a virtual object generated on the basis of the imaged tower.
FIG. 6 is a diagram illustrating a virtual object generated on the basis of the imaged forest.
FIG. 7 is a diagram illustrating a route along which the moving body has moved.
FIG. 8 is a diagram illustrating a state in which a plane on a desk existing in a real space is detected by the user terminal.
FIG. 9 is a diagram illustrating a state in which a waypoint is selected on the basis of an operation of the user.
FIG. 10 is a diagram illustrating a state in which a waypoint is selected on the basis of an operation of the user.
FIG. 11 is a diagram illustrating a state in which a position of the waypoint is adjusted on the basis of an operation of the user.
FIG. 12 is a diagram illustrating a state in which a position of the waypoint is adjusted on the basis of an operation of the user.
FIG. 13 is a diagram illustrating a state in which a route of the moving body is newly set on the basis of an operation of the user.
FIG. 14 is a diagram illustrating a state in which a route of the moving body is newly set on the basis of an operation of the user.
FIG. 15 is a diagram illustrating a state in which a position of an imaging unit included in the user terminal is set as a waypoint.
FIG. 16 is a diagram illustrating a display screen in a case where the position of the imaging unit included in the user terminal is set as the waypoint.
FIG. 17 is a diagram illustrating a state in which a position away from the user terminal by a predetermined distance is set as a waypoint.
FIG. 18 is a diagram illustrating a display screen in a case where the position away from the user terminal by the predetermined distance is set as the waypoint.
FIG. 19 is a diagram illustrating a state in which a waypoint is set using a designation bar.
FIG. 20 is a diagram illustrating a display screen when the waypoint is set by the designation bar.
FIG. 21 is a diagram illustrating a state in which an orientation of the imaging device of the moving body is set by shifting an orientation of the user terminal.
FIG. 22 is a diagram illustrating a state in which an angle of view of the imaging device of the moving body is set by performing a pinch operation on the display screen of the user terminal.
FIG. 23 is a diagram illustrating the display screen displaying a result of simulating a movement of the moving body.
FIG. 24 is a diagram illustrating the display screen displaying a result of simulating an image to be captured by the imaging device included in the moving body.
FIG. 25 is a flowchart illustrating a manual operation-based imaging method.
FIG. 26 is a flowchart illustrating a method of causing the imaging device to capture a video by causing the moving body to automatically fly.
FIG. 27 is a flowchart illustrating a procedure until a virtual object is generated.
FIG. 28 is a flowchart illustrating a procedure until a video is captured on the basis of generated movement information and imaging information.
FIG. 29 is a diagram illustrating displaying processing by an information processing apparatus.
FIG. 30 is a functional block diagram illustrating a configuration example of a hardware configuration of the user terminal constituting the information processing system according to an embodiment of the present disclosure.

### Description of Embodiments

Hereinafter, preferred embodiments of the present disclosure will be described in detail with reference to the accompanying drawings. Note that, in the present specification and the drawings, a plurality of components having substantially the same functional configuration may be distinguished from each other by attaching different alphabets after the same reference numeral. For example, the plurality of components having substantially the same functional configuration will be distinguished from each other, like a user terminal 10a and a user terminal 10b, if necessary. However, in a case where it is not necessary to particularly distinguish the plurality of components having substantially the same functional configuration from each other, only the same reference numeral will be attached. For example, in a case where it is not necessary to particularly distinguish the user terminal 10a and the user terminal 10b from each other, they will simply be referred to as user terminal 10.

Note that the description will be given in the following order.
1. Configuration
   1.1. Configuration of Information Processing System
   1.2. Configuration of User Terminal
2. Generation of Virtual Object
3. Example of Operation
   3.1. Generation of Movement Information
   3.2. Generation of Imaging Information
   3.3. Simulation of Operation of Moving Body
4. Imaging Method
   4.1. Manual Operation-Based Imaging Method
   4.2. Automatic Flight-Based Imaging Method
   4.3. Imaging Method Using Map Displayed on Display Screen of Terminal
   4.4. Imaging Method According to Present Disclosure
5. Effects
6. Hardware Configuration
7. Supplement

### <1. Configuration>

### <<1.1. Configuration of Information Processing System>>

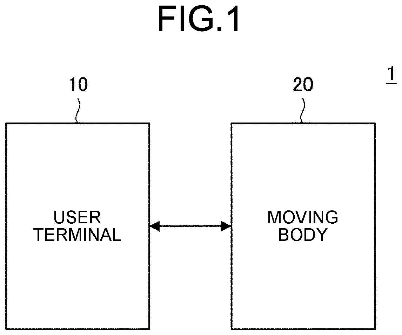

First, a configuration of an information processing system 1 according to an embodiment of the present disclosure will be described with reference to FIG. 1. FIG. 1 is a diagram illustrating a configuration of the information processing system 1 according to an embodiment of the present disclosure. The information processing system 1 includes a user terminal 10 and a moving body 20. The user terminal 10 and the moving body 20 are communicably connected to each other.

The user terminal 10 may be, for example, a smartphone, a tablet terminal, or the like. The user terminal 10 generates movement information for controlling a movement of the moving body 20 according to an operation of a user, and transmits the movement information to the moving body 20. In addition, the user terminal 10 can also display a virtual object and the like, which will be described later, according to an operation of the user.

The moving body 20 is a device moving on the basis of the movement information generated by the user terminal 10. Here, the moving body 20 can be any type of movable device, but it will be assumed in the following description that the moving body 20 is a drone. In addition, the moving body 20 may be equipped with an imaging device for imaging a landscape.

### <<1.2. Configuration of User Terminal>>

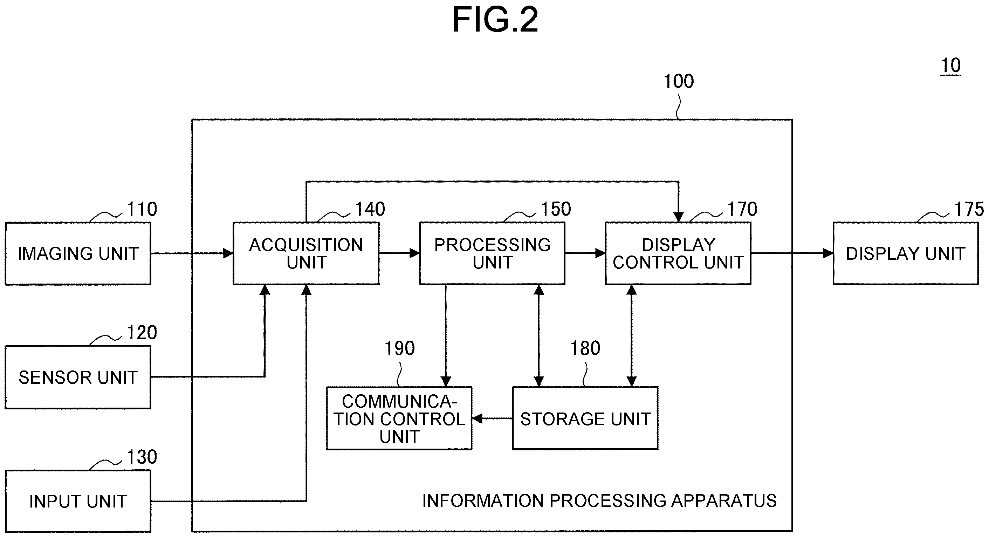

A configuration of the user terminal 10 according to an embodiment of the present disclosure will be described with reference to FIG. 2. FIG. 2 is a functional block diagram illustrating a configuration of the user terminal 10 according to an embodiment of the present disclosure.

The user terminal 10 functions to acquire image information, sensor information, information based on the operation of the user, and the like, and output results of performing various types of processing on the acquired information. The functions of the user terminal 10 are implemented by an information processing apparatus 100, an imaging unit (first imaging device) 110, a sensor unit 120, an input unit 130, and a display unit 175 included in the user terminal 10 in cooperation with each other.

The imaging unit 110 may be any known type of imaging device that captures an image. The imaging unit 110 includes any known imaging element such as a charge coupled device (CCD) or a complementary metal oxide semiconductor (CMOS) sensor. In addition to such an imaging element, the imaging unit 110 may include various members such as a lens for forming an image of a subject on the imaging element and a light source for irradiating the subject with illumination light. The imaging unit 110 transmits the image information obtained by capturing the image to the information processing apparatus 100.

The sensor unit 120 includes at least one of various known types of sensors, for example, a distance measuring sensor, an inertial measurement unit (IMU), and the like. The distance measuring sensor may be, for example, a stereo camera, a time of flight (ToF) sensor, or the like. The distance measuring sensor detects distance information, for example, regarding a distance between the user terminal 10 and an object or the like existing on the periphery thereof, and transmits the detected distance information to the information processing apparatus 100. In addition, the IMU includes at least one of, for example, an acceleration sensor, a gyro sensor, or a magnetic sensor. The IMU transmits detected information as IMU information to the information processing apparatus 100.

The input unit 130 functions to generate input information on the basis of an operation by the user. The input unit 130 can be, for example, a touch panel or the like. The input unit 130 generates the input information on the basis of any kind of operation by the user, for example, a touch operation, a drag operation, a pinch-out operation, a pinch-in operation, or the like. The input unit 130 transmits the generated input information to an acquisition unit 140.

The information processing apparatus 100 functions to perform various types of processing on the basis of the acquired information and control a display on the display unit 175 on the basis of the results of the processing. The functions of the information processing apparatus 100 are implemented by the acquisition unit 140, a processing unit 150, a display control unit 170, a storage unit 180, and a communication control unit 190 in cooperation with each other.

The acquisition unit 140 acquires information input from at least one of the imaging unit 110, the sensor unit 120, or the input unit 130. The acquisition unit 140 transmits the acquired information to the processing unit 150.

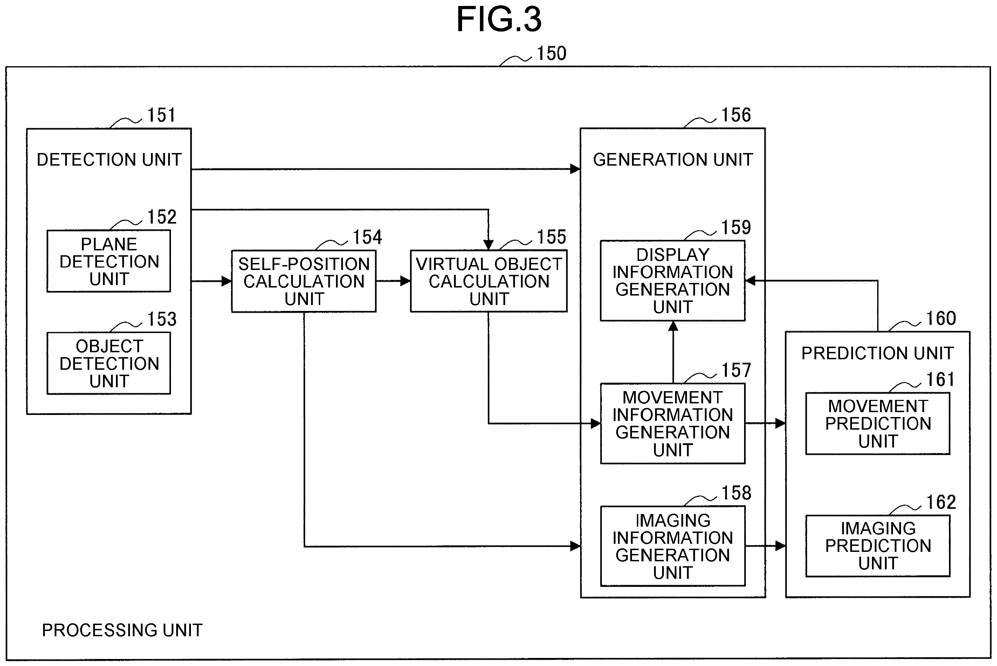

The processing unit 150 functions to perform various types of processing on the basis of the information transmitted from the acquisition unit 140. For example, the processing unit 150 functions to generate information for controlling the moving body 20 on the basis of the information transmitted from the acquisition unit 140. In addition, the processing unit 150 generates information regarding contents to be displayed on a display screen of the display unit 175. The detailed configuration and functions of the processing unit 150 will be described later with reference to FIG. 3. The processing unit 150 transmits the generated information to the display control unit 170, the storage unit 180, or the communication control unit 190.

The display control unit 170 functions to control a display on the display screen of the display unit 175. The display control unit 170 controls, for example, a display of a virtual object based on an object existing in a real space on the display screen of the display unit 175, on the basis of the information transmitted from the processing unit 150.

The display unit 175 is any known type of display device that functions to display an image. In the present embodiment, the display unit 175 is integrated with the above-described input unit 130 and configured as a touch panel. As will be described later, the user can cause the information processing apparatus 100 to generate movement information for controlling a movement of the moving body 20 in the user terminal 10 by performing a predetermined operation while referring to the display screen of the display unit 175.

The storage unit 180 functions to store various kinds of information such as information generated or acquired by the information processing apparatus 100. For example, the storage unit 180 may store information regarding a virtual object generated in advance. Note that a method of generating a virtual object will be described later. Furthermore, the storage unit 180 may store movement information for controlling a movement of the moving body 20. More specifically, the storage unit 180 may store information (waypoint information) regarding a specific point (also referred to as "waypoint") included in a route of the moving body 20. The route of the moving body 20 may be formed by connecting a plurality of waypoints to one another. Furthermore, the storage unit 180 may store movement information, imaging information, or the like generated by the processing unit 150. The information stored in the storage unit 180 is referred to by the processing unit 150, the display control unit 170, or the communication control unit 190 if necessary.

The communication control unit 190 functions to control transmission of various kinds of information generated by the processing unit 150. The communication control unit 190 controls transmission of movement information or imaging information generated by the processing unit 150. The movement information or the imaging information is transmitted to the moving body 20. The moving body 20 can move or capture an image on the basis of the transmitted information.

Next, the processing unit 150 included in the information processing apparatus 100 will be described in more detail with reference to FIG. 3. FIG. 3 is a functional block diagram illustrating a configuration of the processing unit 150. As illustrated in FIG. 3, the processing unit 150 includes a detection unit 151, a self-position calculation unit 154, a virtual object calculation unit 155, a generation unit 156, and a prediction unit 160.

The detection unit 151 functions to perform various types of detection on the basis of the information transmitted from the acquisition unit 140. The functions of the detection unit 151 are implemented by a plane detection unit 152 and an object detection unit 153. The plane detection unit 152 functions to detect a plane included in an image on the basis of the image information, the distance information, and the like. The object detection unit 153 functions to detect a predetermined object included in an image on the basis of the image information, the distance information, and the like. The detection unit 151 transmits a detection result to the self-position calculation unit 154.

The self-position calculation unit 154 functions to calculate a self-position of the user terminal 10. Here, the self-position of the user terminal 10 includes not only a position where the user terminal 10 exists but also a posture of the user terminal 10. Specifically, the self-position calculation unit 154 calculates a position or posture of the user terminal 10 with respect to an environment or object around the user terminal 10, with the image information, the distance information, and the IMU information being input thereto, using a simultaneous localization and mapping (SLAM) technology. At this time, the self-position calculation unit 154 may determine an origin or a scale in SLAM on the basis of the object information, the plane information, or the like. The self-position calculation unit 154 transmits a calculation result to the virtual object calculation unit 155 and the generation unit 156.

The virtual object calculation unit 155 generates information regarding a virtual object to be arranged on the display screen. More specifically, the virtual object calculation unit 155 calculates arrangement information (information regarding a position, an orientation, or the like), scale information, or the like on the virtual object to be arranged on the display screen of the display unit 175, on the basis of the self-position of the user terminal 10 calculated by the self-position calculation unit 154, the detection result of the detection unit 151, the input information input to the input unit 130, the information regarding the virtual object stored in the storage unit 180, and the like. Here, the virtual object calculation unit 155 calculates a scale of the virtual object based on a scale of the real space. More specifically, the virtual object calculation unit 155 determines the scale of the virtual object to be displayed on the display screen to generate scale information by appropriately expanding or contracting the scale of the virtual object from a scale of a real object on which the virtual object is based. The virtual object calculation unit 155 transmits a calculation result to a movement information generation unit 157, which will be described later.

The generation unit 156 functions to generate various kinds of information for controlling the moving body 20. More specifically, the generation unit 156 generates information for controlling a movement of the moving body 20, an operation of an imaging device (second imaging device) included in the moving body 20, a display of the display unit 175, and the like. The functions of the generation unit 156 are implemented by the movement information generation unit 157, an imaging information generation unit 158, and a display information generation unit 159 included in the generation unit 156.

The movement information generation unit 157 generates movement information related to the virtual object for controlling a movement of the moving body 20. Specifically, the movement information generation unit 157 generates a position and an orientation of a waypoint as the movement information on the basis of the self-position of the user terminal 10, the information input to the input unit 130, the arrangement information and the scale information on the virtual object, and the waypoint information. For example, the movement information generation unit 157 may generate a route of the moving body 20 as the movement information. At this time, the movement information generation unit 157 may generate scale-related movement information according to the scale information on the virtual object, or may generate movement information by adapting the movement information to match the scale of the real space. Furthermore, the movement information generation unit 157 can also correct the movement information on the basis of an operation of the user through the input unit 130 or the like to generate new movement information. The operation by the user will be described in detail later. The movement information generation unit 157 transmits the generated movement information to the display information generation unit 159, the prediction unit 160, and the storage unit 180.

The imaging information generation unit 158 functions to generate imaging information for controlling an imaging range of the imaging device included in the moving body 20 on the basis of an operation of the user. More specifically, the imaging information generation unit 158 generates imaging information regarding a direction in which the imaging device faces, an angle of view, or the like on the basis of the input information generated by the input unit 130 or the like. The imaging information generation unit 158 transmits the generated imaging information to the prediction unit 160 and the storage unit 180.

The display information generation unit 159 functions to generate display information regarding contents to be displayed on the display unit 175. More specifically, the display information generation unit 159 generates computer graphics (CG) to be displayed on the display unit 175 as the display information on the basis of the position of the imaging unit 110, the arrangement information and the scale information on the virtual object, the waypoint information, a prediction result of the prediction unit 160, which will be described later, and the like. The display information generation unit 159 can generate a video showing the movement of the moving body 20 as the display information. Furthermore, the display information generation unit 159 can also generate display information for displaying a simulation video to be captured by the imaging device included in the moving body 20. The display information generation unit 159 transmits the generated display information to the display control unit 170.

The prediction unit 160 functions to predict an operation of the moving body 20. More specifically, the prediction unit 160 can predict a movement of the moving body 20 and an operation of the imaging device included in the moving body 20. The functions of the prediction unit 160 are implemented by a movement prediction unit 161 and an imaging prediction unit 162. The prediction unit 160 transmits a prediction result to the display information generation unit 159.

The movement prediction unit 161 functions to predict a movement of the moving body 20 on the basis of the movement information. For example, the movement prediction unit 161 can predict a route of the moving body 20. Furthermore, the imaging prediction unit 162 predicts an image to be captured by the imaging device included in the moving body 20 on the basis of the movement information and the imaging information. More specifically, the imaging prediction unit 162 predicts an image to be captured by the imaging device on the basis of the route along which the imaging device passes, the posture of the imaging device, and the like.

### <2. Generation of Virtual Object>

In the present embodiment, a virtual object is displayed on the display unit 175, and the user can cause the information processing apparatus 100 to generate movement information, imaging information, or the like by performing a predetermined operation while viewing the display. Here, an example of a method of generating the virtual object will be described. Note that the method of generating the virtual object is not limited to what will be described below, and the virtual object may be generated by any method.

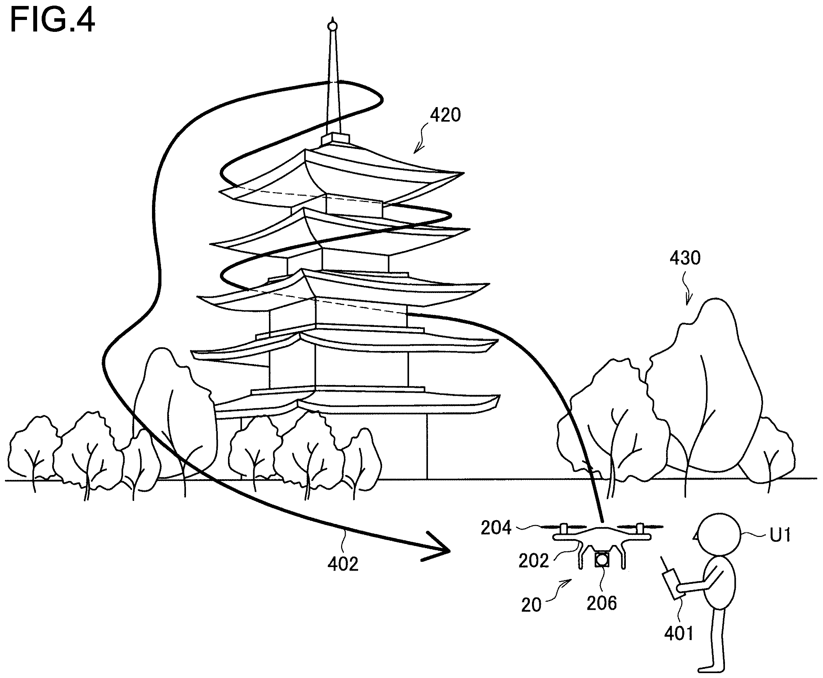

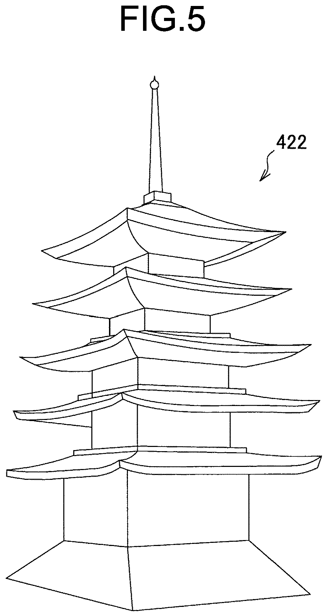

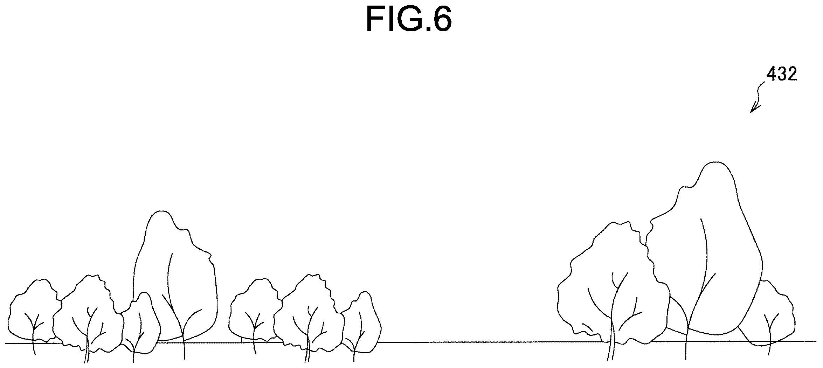

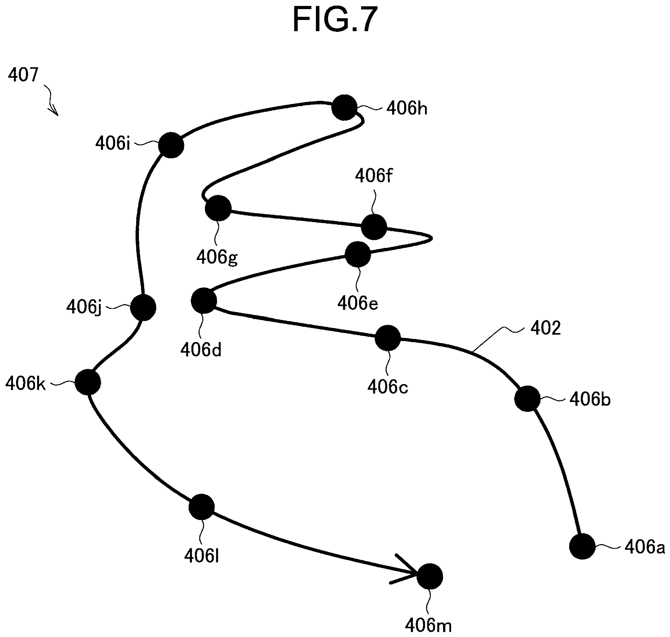

The method for generating the virtual object will be described with reference to FIGS. 4 to 7. FIG. 4 is a diagram illustrating a state in which a user U1 steers the moving body 20 to image a tower 420 and a forest 430. In addition, FIG. 5 is a diagram illustrating a virtual object 422 generated on the basis of the imaged tower 420. In addition, FIG. 6 is a diagram illustrating a virtual object 432 generated on the basis of the imaged forest 430. Further, FIG. 7 is a diagram illustrating a route 402 along which the moving body 20 has moved.

First, the method for generating the virtual object according to the present embodiment will be briefly described. Here, it is assumed that the user U1 wants an imaging device 206 to capture a video including the tower 420. In the present embodiment, first, the user U1 steers the moving body 20 using a steering device 401 such that the imaging device 206 images the tower 420 existing in a real space and the forest 430 existing around the tower 420 in advance. Next, on the basis of the captured image, a three-dimensional virtual object is generated using various CG technologies. In the present embodiment, movement information is further generated with waypoints being set in the route along which the moving body 20 has passed. Hereinafter, the method of generating the virtual object will be described in more detail with reference to FIGS. 4 to 7.

First, as illustrated in FIG. 4, the user U1 causes the moving body (drone) 20 to fly using the steering device 401. The moving body 20 includes an airframe 202, a propeller 204, and the imaging device 206. The moving body 20 can fly by driving the propeller 204. In addition, the

user U1 steers the propeller 204 or the like to control an orientation, a posture, a speed, and the like of the airframe 202. Furthermore, the imaging device 206 included in the moving body 20 images a landscape around the moving body 20. Here, an image including the tower 420 and the forest 430 on the periphery thereof as illustrated in FIG. 4 is captured by the imaging device 206.

On the basis of the captured image, virtual objects of the tower 420 and the forest 430 are generated using various known CG technologies. More specifically, the virtual object 422 of the tower 420 existing in the real space as illustrated in FIG. 5 and the virtual object 432 of the forest 430 existing in the real space as illustrated in FIG. 6 are generated. The information regarding the virtual objects generated in this way is stored in the storage unit 180 included in the information processing apparatus 100.

Furthermore, the user U1 may cause the moving body 20 to actually implement a flight when a desired image is captured. More specifically, the user U1 steers the moving body 20 so that the moving body 20 passes along the route 402 that turns around the tower 420 as illustrated in FIG. 4. The moving body 20 calculates the route 402 along with the moving body 20 has moved using a sensor included in the moving body 20, and records a calculation result in a recording medium or the like included in the moving body 20. Here, waypoints may be set in the route 402 in accordance with a predetermined rule. For example, a waypoint may be set for each predetermined distance. In addition, a waypoint density may be adjusted according to a curvature of the route 402.

FIG. 7 illustrates an example of the route 402 along which waypoints 406 are set. Note that, although 13 waypoints 406a to 406m are illustrated in FIG. 7, the number of waypoints is not limited thereto. The number of waypoints set in the route 402 may be two or more and 12 or less, or may be 14 or more. Also, note that waypoints are also illustrated in the drawings used for the following description, but the number of waypoints is not limited to that illustrated in the drawings.

The information regarding the route 402 along which the waypoints are set as described above may be stored as the movement information in the storage unit 180 included in the information processing apparatus 100.

### <3. Example of Operation>

Here, a specific example of an operation by the user for causing the information processing apparatus 100 to generate movement information, imaging information, or the like on the basis of the virtual objects generated as described above will be described.

### <<3.1. Generation of Movement Information>>

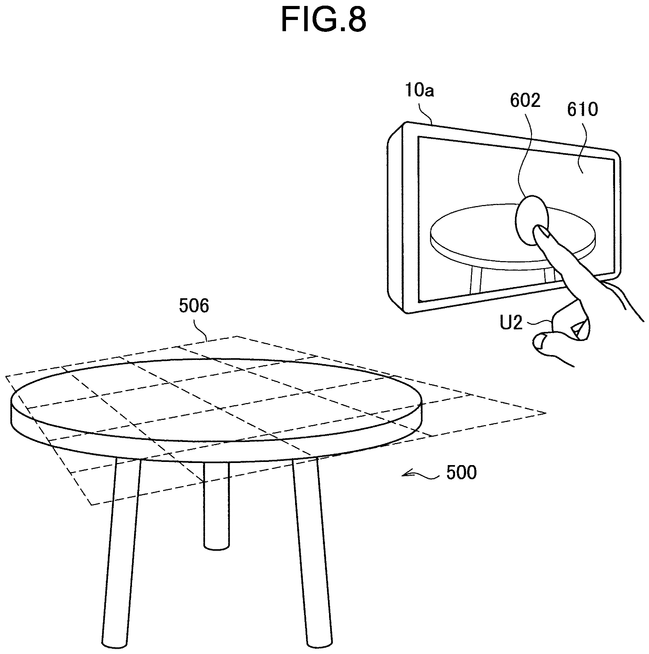

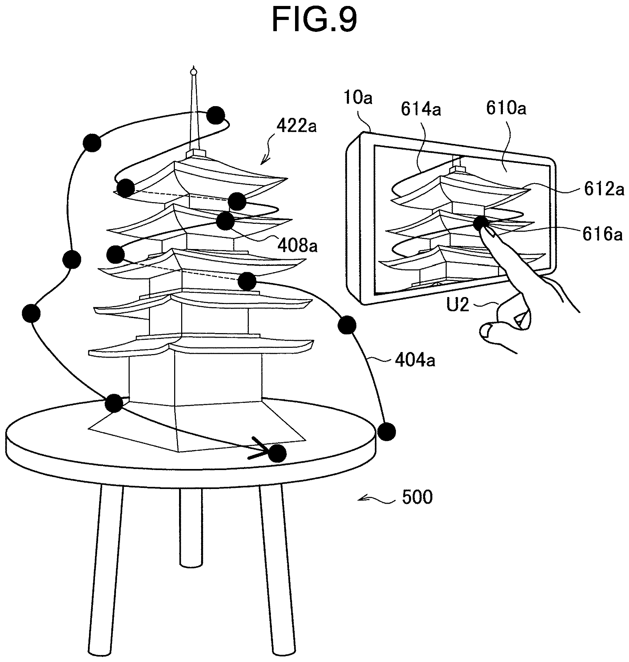

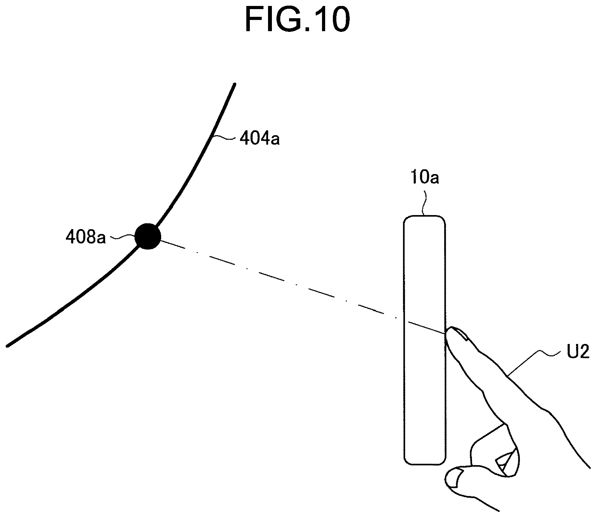

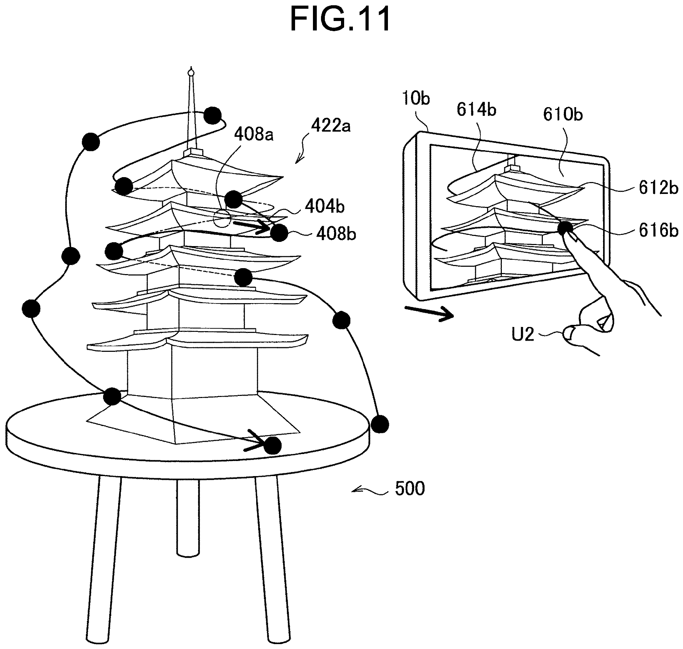

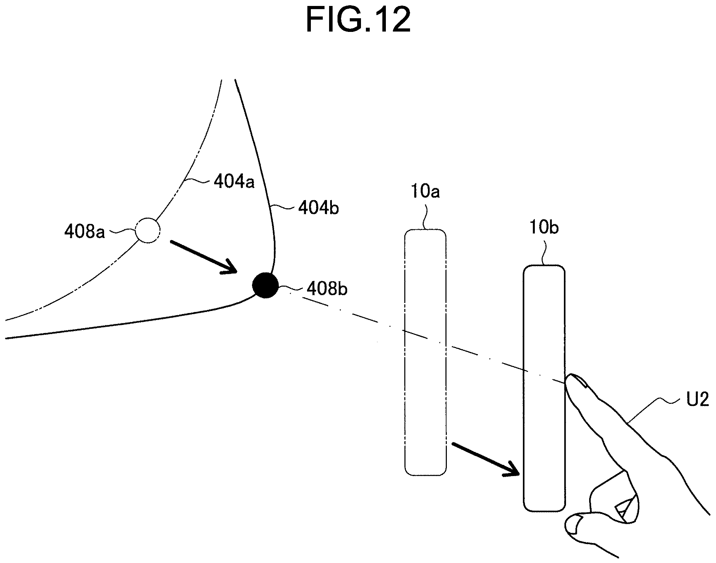

A case where movement information is generated on the basis of an operation of a user will be described. First, with reference to FIGS. 8 to 12, a case where, when movement information is recorded in advance in the information processing apparatus 100, the movement information is corrected to generate new movement information will be described. FIG. 8 is a diagram illustrating a state in which a plane on a desk 500 existing in a real space is detected by a user terminal 10a. FIGS. 9 and 10 are diagrams illustrating a state in which a waypoint 408a is selected on the basis of an operation of a user U2. Further, FIGS. 11 and 12 are diagrams illustrating a state in which the position of the waypoint 408a is adjusted on the basis of an operation of the user U2.

As illustrated in FIG. 8, it is assumed that the desk 500 exists in the real space before the eyes of the user U2. The user U2 possesses the user terminal 10a, and a start button 602 for starting displaying virtual objects and setting waypoints is displayed on a display screen 610 of the user terminal 10a. Here, the display screen 610 also functions as the input unit 130 that receives a touch operation, a pinch operation, or the like from the user U2. When the user U2 touches the start button 602, the user terminal 10a detects a plane 506 on the desk 500.

Then, as illustrated in FIG. 9, an image 612a of a virtual object 422a of the tower and an image 614a of a virtual route 404a of the moving body 20 generated in advance are displayed on a display screen 610a of the user terminal 10a. Here, the virtual route is a route in a virtual space in which the virtual object is arranged. A scale of the virtual route is appropriately expanded or contracted to form a real route along which the moving body 20 actually moves. Hereinafter, in a case where it is not necessary to particularly distinguish the virtual route and the real route from each other, they will also be referred to simply as "route". At this time, the virtual object 422a is displayed on the display screen 610a as if it was arranged on the desk 500. Note that, although the virtual object 422a is illustrated as being arranged on the desk 500 in FIG. 9, the virtual object 422a is illustrated for explanation here, and the virtual object 422a is not actually arranged on the desk 500.

Here, the image 614a of the virtual object 422a may be sized, for example, to be put on the desk 500 as illustrated in FIG. 9. In addition, an image 616a of the waypoint 408a for adjusting the virtual route 404a is displayed in the image 614a of the virtual route 404a. In the present embodiment, the user U2 can also adjust the size of the image 612a of the virtual object displayed on the display screen 610a (that is, a distance from the user terminal 10a to the virtual object 422a) by performing a pinch operation or the like on the display screen 610a. At this time, the user terminal 10a may store a ratio between the size of the tower existing in the real space, on which the virtual object 422a is based, and the size of the virtual object 422a.

In the present embodiment, since the image 612a of the virtual object 422a is displayed on a plane (on the desk 500), the user U2 can feel as if the virtual object 422a was arranged on the ground. Therefore, the user U2 can operate the user terminal 10a more intuitively.

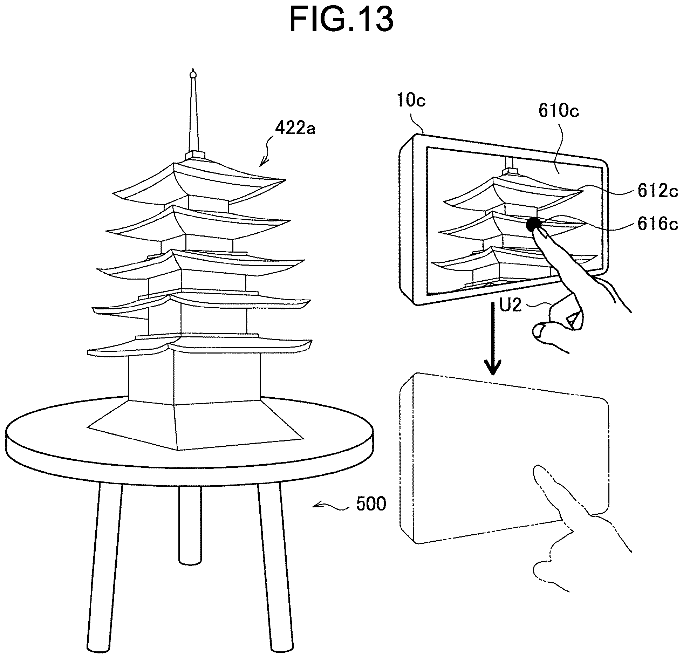

Here, it is assumed that the moving body 20 is flying in advance by manual steering or the like, and the virtual route 404a is generated on the basis of the flight. In addition, it is assumed that waypoints are set in the virtual route 404a in advance. Specifically, as illustrated in FIG. 9, 13 waypoints indicated by circles are set in the virtual route 404a. Further, one waypoint 408a of the 13 waypoints corresponds to the image 616a of the waypoint displayed on the display screen 610a.

The user U2 can select a waypoint to be adjusted by touching the image 616a of the waypoint displayed on the display screen 610a. Here, it is assumed that the user U2 selects the waypoint 408a in the virtual route 404a. Furthermore, in a state where the waypoint 408a is selected, the user U2 can adjust a position of the waypoint 408a by performing a pinch operation, a drag operation, or the like on the display screen 610a. Furthermore, in the present embodiment, the user U2 can also adjust an orientation of the imaging device included in the moving body 20 by operating the display screen 610a. For example, in a state where the waypoint 408a is selected, the user U2 can designate an orientation of the imaging device of the moving body 20 when the moving body 20 passes through a position corresponding to the waypoint 408a, by performing a pinch operation, a drag operation, or the like on the display screen 610a.

Next, in the state where the waypoint 408a is selected, the user U2 shifts a position of the user terminal 10a. For example, as illustrated in FIGS. 11 and 12, the user U2 pulls the user terminal 10a toward the user U2. Accordingly, the position of the selected waypoint 408a shifts according to the movement of the user terminal 10b. In addition, the virtual route 404a changes to a virtual route 404b according to a position of a waypoint 408b after the movement. By changing the virtual route 404, a route along which the moving body 20 actually moves is adjusted. As described above, in the present embodiment, the route of the moving body 20 is adjusted on the basis of the operation by the user U2 for moving the user terminal 10a. In this way, the route of the moving body 20 is adjusted, and movement information indicating the adjusted route is newly generated. On the basis of the movement information, the moving body 20 can fly around the tower 420.

Here, the case where the waypoints are set in the virtual route 404a in advance has been described. In a case where the waypoints are not set in the virtual route 404a in advance, the user U2 can also set a waypoint by touching a part of an image 614 of a virtual route 404 displayed on the display screen 610. The waypoint set in this way can also be adjusted according to the above-described method.

As described above, according to the present embodiment, in a state where the waypoints are set, the user U2 can minutely adjust a waypoint by performing an operation on the display screen 610 and an operation for moving the user terminal 10a. Therefore, it is possible to more intuitively generate information for moving the moving body 20.

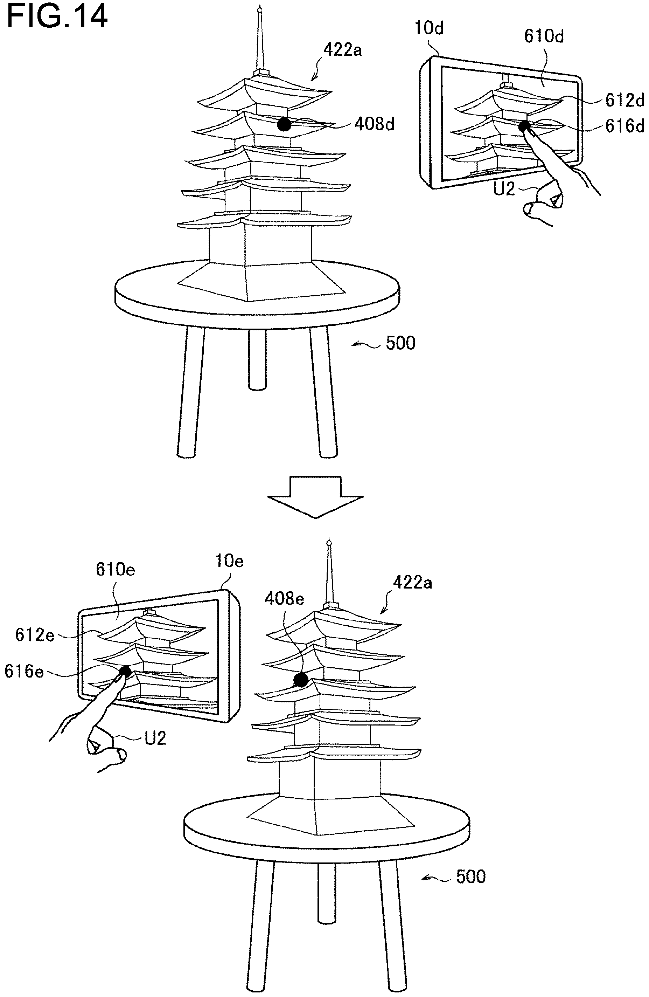

The method of generating new movement information by adjusting the virtual route 404a in a case where the virtual route 404a of the moving body 20 is set in advance has been described above. Next, two methods of setting a route of the moving body 20 in a case where the route of the moving body 20 is not set in advance will be described with reference to FIGS. 13 and 14. FIGS. 13 and 14 are diagrams illustrating a state in which a route of the moving body 20 is newly set on the basis of an operation of the user U2.

Note that, in either method, the user U2 operates the user terminal 10 to set a route of the moving body 20 and a waypoint. The waypoint set according to the methods to be described with reference to FIGS. 13 and 14 may also be adjusted according to the method described above with reference to FIGS. 8 to 12.

A first method of setting a route of the moving body 20 will be described with reference to FIG. 13. First, the user U2 touches a part of a display screen 610c of a user terminal 10c (for example, a designation point 616c shown on the display screen 610c). The user U2 moves the user terminal 10c, for example, downward, as indicated by a broken line, while touching the designation point 616c. The user terminal 10c stores the route along which the user terminal 10c has moved as a route of the moving body 20. At this time, the user terminal 10c may set a waypoint in the route and store the waypoint together with the route.

Next, a second method of setting a route of the moving body 20 will be described with reference to FIG. 14. In the second method, as illustrated in the upper part of FIG. 14, the user U2 sets a waypoint 408d by touching a display screen 610d of a user terminal 10d. An image 616d of the set waypoint 408d is displayed on the display screen 610d.

Next, as illustrated in the lower part of FIG. 14, the user U2 shifts a position of the user terminal 10d, and sets a waypoint 408e by touching a display screen 610e of a user terminal 10e at a new position. Thereafter, the movement of the user terminal 10 and the setting of the waypoint 408 are repeated, and a plurality of set waypoints 408 are connected to one another, thereby generating a route of the moving body 20. The generated route and waypoints 408 are stored in the user terminal 10.

In this way, according to the present embodiment, even in a case where a route of the moving body 20 is not set in advance, the user U2 can set a route of the moving body 20 by performing an operation on the display screen 610 and an operation for moving the user terminal 10.

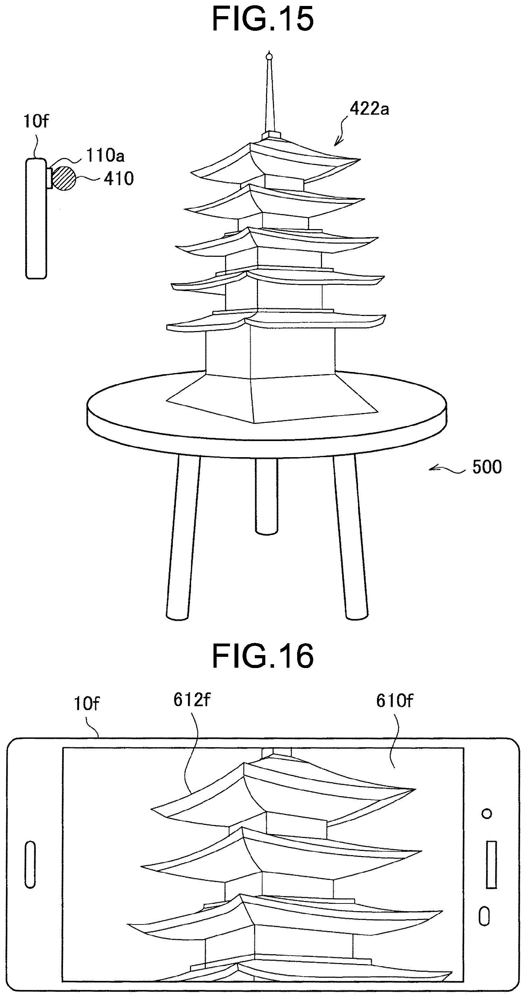

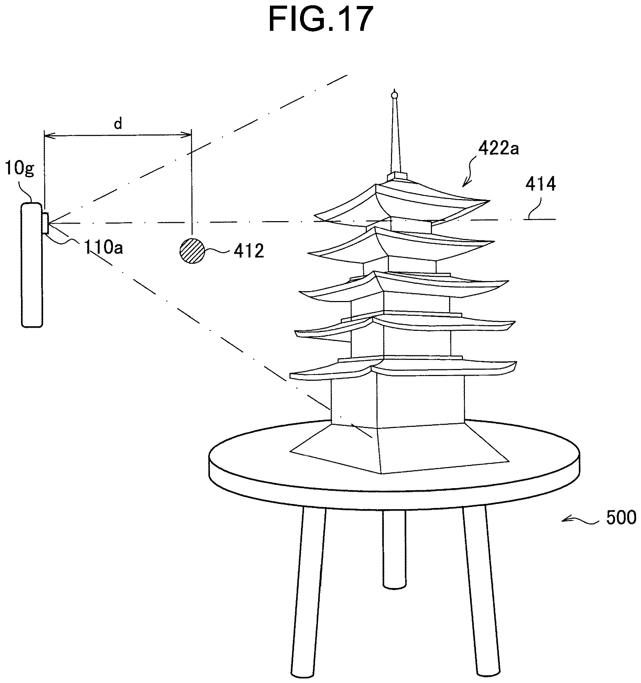

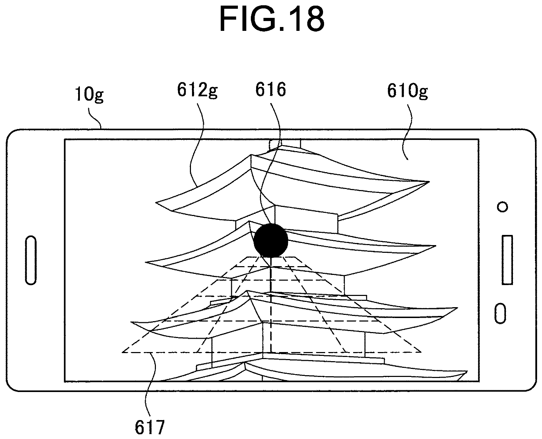

Here, the position of the waypoint set by operating the user terminal 10 will be described in more detail with reference to FIGS. 15 to 18. FIG. 15 is a diagram illustrating a state in which a position of an imaging unit 110a included in a user terminal 10f is set as a waypoint 410. In addition, FIG. 16 is a diagram illustrating a display screen 610f in a case where the position of the imaging unit 110a included in the user terminal 10f is set as the waypoint 410. In addition, FIG. 17 is a diagram illustrating a state in which a position away from a user terminal 10g by a predetermined distance is set as a waypoint 412. Further, FIG. 18 is a diagram illustrating a display screen 610 in a case where the position away from the user terminal 10g by the predetermined distance is set as the waypoint 412.

First, a position of a waypoint to be set will be described with reference to FIGS. 15 and 16. As illustrated in FIG. 15, the virtual object 422a of the tower is arranged on the desk 500. The imaging unit 110a included in the user terminal 10f captures an image in front of the imaging unit 110a. That is, the imaging unit 110a captures an image in a range in which the virtual object 422a is included. Here, the position of the imaging unit 110a is designated as a waypoint.

At this time, as illustrated in FIG. 16, an image 612f of the virtual object of the tower arranged on the desk 500 is displayed on the display screen 610f of the user terminal 10f. The user can set a waypoint by touching the display screen 610f or doing the like while viewing the display screen 610f. In addition, the user can set a waypoint 410 at a new position by moving the user terminal 10f.

At this time, an image displayed on the display screen 610 may correspond to that to be actually captured at a waypoint by the imaging device of the moving body 20. In this case, the user can check an image to be captured by the imaging device included in the moving body 20 in advance.

Next, a method in which the user terminal 10g sets a position away from the imaging unit 110a by a predetermined distance as a waypoint will be described with reference to FIGS. 17 and 18. Specifically, a position away forward from the imaging unit 110a by a distance d and slightly deviating downward from an optical axis 414 of the imaging unit 110a is set as a waypoint 412.

At this time, as illustrated in FIG. 18, an image 612g of the virtual object of the tower and an image 616 of the waypoint are displayed on a display screen 610g of the user terminal 10g. Further, a guide surface 617 connecting the user terminal 10g and the image 616 of the waypoint to each other is displayed on the display screen 610g. The user can set a waypoint 412 by performing a touch operation on the display screen 610g or the like while viewing the image 616 of the waypoint arranged on the guide surface 617.

At this time, since the waypoint 412 is positioned to be lower than the optical axis 414 of the imaging unit 110a, it is considered that the user can more easily recognize the position of the waypoint 412, referring to the display screen 610g.

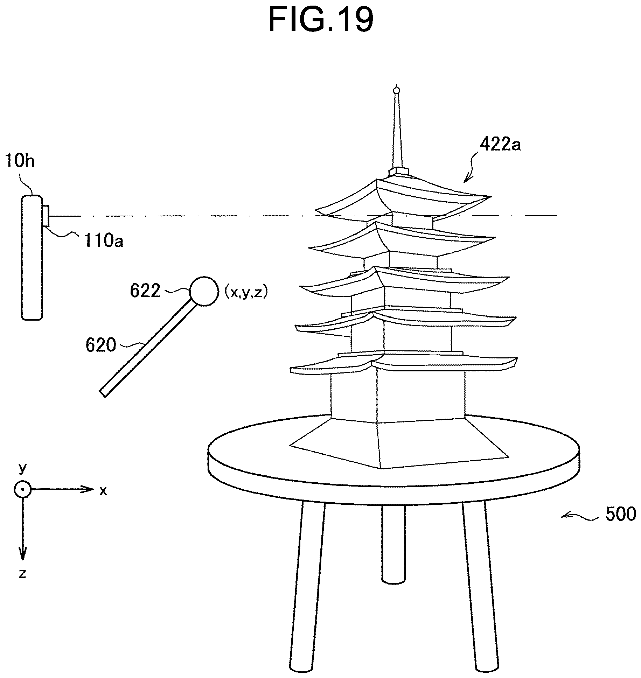

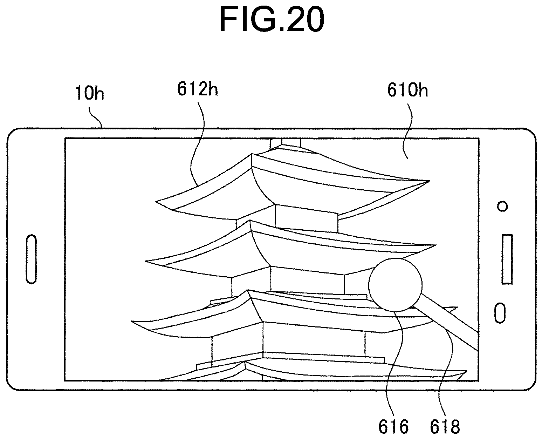

The method of setting a waypoint by operating the display screen 610 has been described above. Next, a variation on the method of setting a waypoint will be described with reference to FIGS. 19 and 20. Specifically, a method of setting a waypoint using a designation object that designates a route of the moving body 20 will be described.

FIG. 19 is a diagram illustrating a state in which a waypoint is set using a designation bar 620. FIG. 20 is a diagram illustrating a display screen 610h when the waypoint is set by the designation bar 620.

In the present embodiment, a spherical designation object 622 is provided at a tip of the designation bar 620. Here, the designation bar 620 may be a touch pen or the like that can perform various operations by touching a user terminal 10. In addition, it is assumed that the user terminal 10h includes a sensor capable of detecting a three-dimensional position of the designation object 622 included in the designation bar 620. Specifically, the user terminal 10h includes, for example, a distance measuring sensor such as a ToF sensor or a stereo camera. The user terminal 10 acquires position information on the designation object 622 on the basis of sensor information of the distance measuring sensor. The position information on the designation object 622 is expressed in a three-dimensional manner as (x, y, z). Here, z is a direction of gravity (vertical direction). The x and y directions are orthogonal to each other while being perpendicular to the z direction.

Here, a waypoint is set on the basis of the position information. Specifically, for example, when the user performs a touch operation or the like on the display screen 610h, the user terminal 10 sets the position of the designation object 622 as a waypoint.

At this time, an image 618 of the designation bar and an image 616 of the designation object are displayed on the display screen 610h of the user terminal 10h. Therefore, the user can set a waypoint while checking the position of the designation object 622 through the display screen 610h.

### <<3.2. Generation of Imaging Information>>

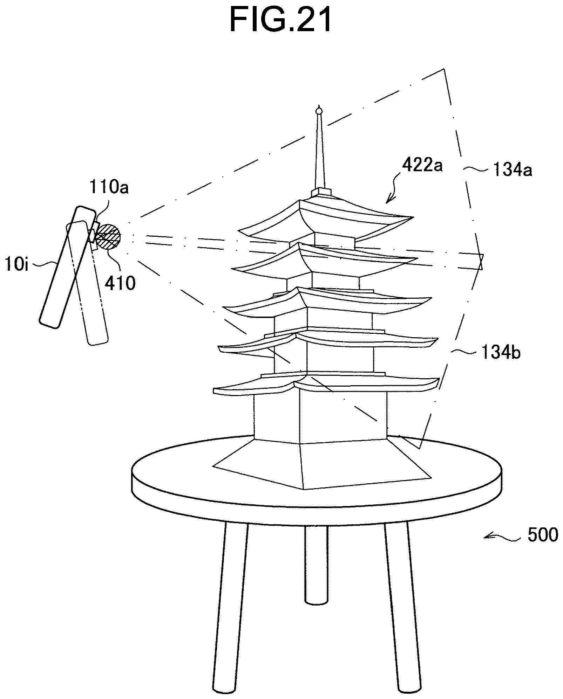

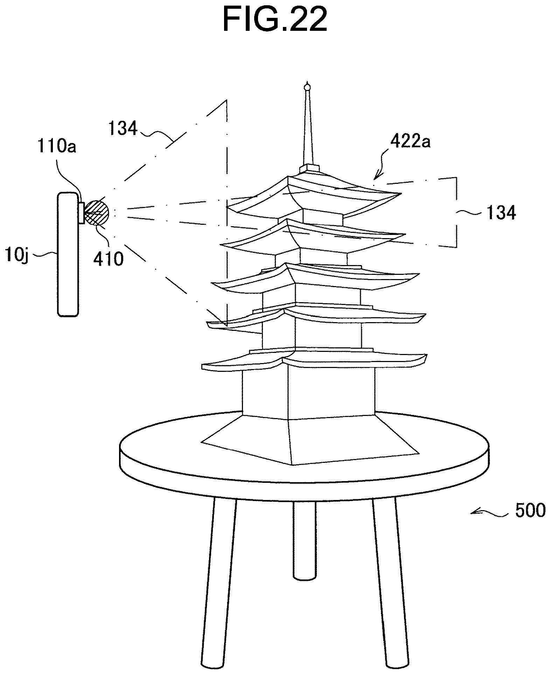

The operation for generating movement information (more specifically, information including waypoints) for controlling a movement of the moving body 20 has been described above. Next, two methods of generating imaging information for controlling an imaging range of the imaging device included in the moving body 20 will be described with reference to FIGS. 21 and 22. FIG. 21 is a diagram illustrating a state in which an orientation of the imaging device of the moving body 20 is set by shifting an orientation of a user terminal 10i. In addition, FIG. 22 is a diagram illustrating a state in which an angle of view of the imaging device of the moving body 20 is set by performing a pinch operation on a display screen of a user terminal 10j.

First, a method of setting an imaging direction of the imaging device of the moving body 20 will be described with reference to FIG. 21. For example, the user selects one of the waypoints included in the route of the moving body 20. In this state, as illustrated in FIG. 21, the user can adjust an imaging direction (that is, an imaging range 134a and 134b) of the imaging unit 110a included in the user terminal 10i by shifting an orientation of the user terminal 10i. Direction information regarding the adjusted imaging direction of the imaging unit 110a is generated as imaging information. That is, the user terminal 10i can generate the direction information on the basis of posture information on the user terminal 10i. On the basis of the direction information, the imaging device of the moving body 20 can capture an image in the same direction as the adjusted direction of the imaging unit 110a at the set waypoint.

In addition, the user terminal 10 according to the present embodiment can generate angle-of-view information for controlling an angle of view of the imaging device of the moving body 20 on the basis of a pinch-out operation or a pinch-in operation on the display screen by the user.

Next, a method of setting an angle of view of the imaging device of the moving body 20 will be described with reference to FIG. 22. For example, the user selects one of the waypoints included in the route of the moving body 20. In this state, the user can adjust an imaging range 134 of the imaging unit 110a to set an angle of view of the imaging device when the moving body 20 passes through the selected waypoint by performing a pinch-out operation or a pinch-in operation on the display screen of the user terminal 10j. That is, the user terminal 10j can generate angle-of-view information for controlling an angle of view of the imaging device of the moving body 20 on the basis of a pinch-out operation or a pinch-in operation on the display screen by the user.

The generation of the direction information and the angle-of-view information by the user terminal 10 on the basis of the operation of the user has been described above. The imaging device of the moving body 20 can capture an image on the basis of the direction information and the angle-of-view information. Note that the direction information and angle-of-view information described above may be generated at the time of setting the position of the waypoint, or may be generated after the position of the waypoint is set.

### <<3.3. Simulation of Operation of Moving Body>>

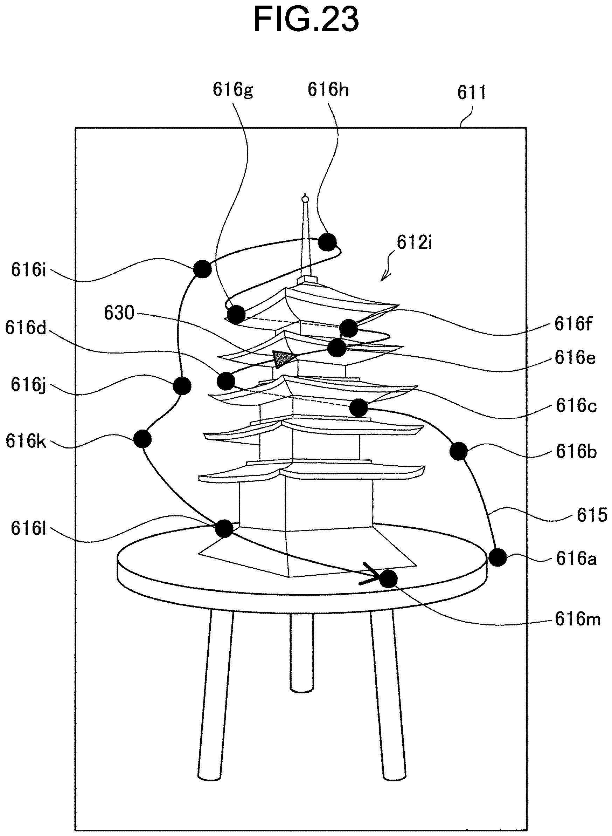

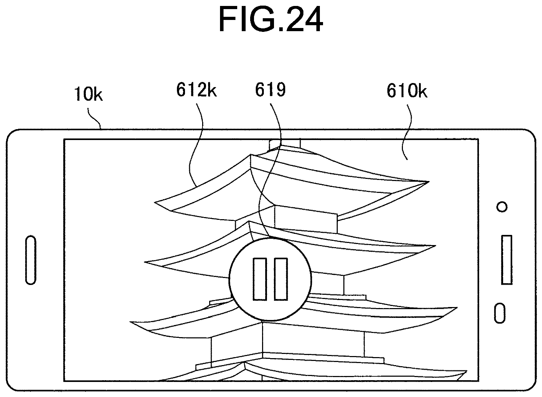

Next, a simulation of an operation of the moving body 20 by the user terminal 10 based on the movement information and the imaging information will be described with reference to FIGS. 23 and 24. Specifically, the user terminal 10 simulates a movement of the moving body 20 and an image to be captured by the imaging device included in the moving body 20. FIG. 23 is a diagram illustrating a display screen 611 displaying a result of simulating the movement of the moving body 20. In addition, FIG. 24 is a diagram illustrating a display screen 610k displaying a result of simulating the image to be captured by the imaging device included in the moving body 20.

As illustrated in FIG. 23, an image 612i of the virtual object of the tower arranged on the desk and an image 630 of the moving body simulatively shown as a triangle are displayed on the display screen 611 of the user terminal 10. When a simulation of a movement of the image 630 of the moving body is started, the image 630 of the moving body moves along a virtual route 615 formed by connecting images 616a to 616m of waypoints to each other. By checking the movement of the image 630 of the moving body, the user can predict how the moving body 20 will actually move.

Furthermore, a user terminal 10k according to the present embodiment can also simulate an image to be captured by the imaging device included in the moving body 20. Specifically, in a case where the moving body 20 has ever flied along the waypoints set as described above, the user terminal 10k can display an image predicted to be captured by the imaging device of the moving body 20. As illustrated in FIG. 24, an image predicted to be captured is displayed on the display screen 610k of the user terminal 10k. By viewing the display screen 610k, the user can predict an image to be captured by the imaging device included in the moving body 20. Note that the user can also stop a moving image displayed on the display screen 610k by touching a stop button 619 shown at the center of the display screen 610k or doing the like.

### <4. Imaging Method>

Hereinafter, a method of imaging a landscape using the moving body 20 will be described. First, three methods of imaging a landscape without using the above-described technology of the present disclosure will be described. Thereafter, a method of imaging a landscape using the moving body 20 according to the technology of the present disclosure will be described.

Note that, in the following description, it is assumed that the moving body 20 (for example, a drone) is caused to fly around a construction such as a tower and capture an impressive video, for example, for commercial use. In such a case, the moving body 20 needs to fly in a three-dimensional space. The capturing of the impressive video is possible only when various conditions such as a position, a speed, and a camera orientation of the moving body 20 for flight are appropriately controlled. Therefore, in order to capture an impressive video, an advanced technique for steering the moving body 20 is required.

In addition, it is difficult for the user to manually operate the moving body 20 to fly along the same trajectory repeatedly. Furthermore, in a case where an image is captured outdoors or in a case where an image is captured in a wide range, it is necessary to consider daylight conditions, entrance and exit of people, and the like, and thus, an imaging timing is important. Therefore, a video with good conditions is obtained by repeating the capturing of the image.

### <<4.1. Manual Operation-Based Imaging Method>>

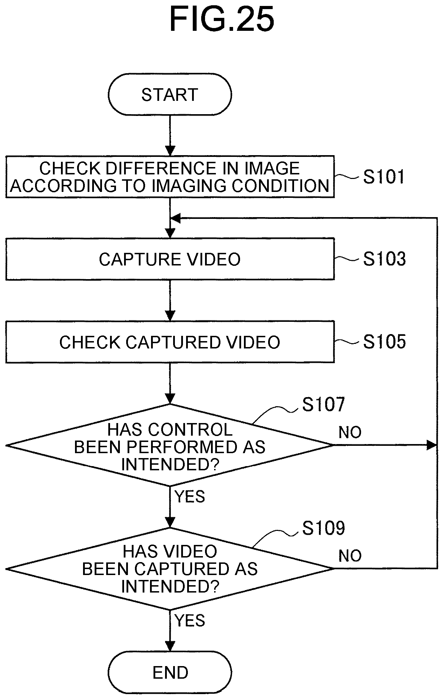

First, a method in which the user steers the moving body 20 by manual operation using a steering device such that the imaging device of the moving body 20 images a landscape will be described with reference to FIG. 25. Here, it is assumed that the movement of the moving body 20, the orientation of the imaging device included in the moving body 20, and the like are operated by the steering device. FIG. 25 is a flowchart illustrating a manual operation-based imaging method. Hereinafter, the manual operation-based imaging method will be described in line with the flowchart illustrated in FIG. 25.

First, the user checks a difference in image according to imaging conditions (Step S101). More specifically, the user manually operates the moving body 20 to actually fly around a construction to check a difference in how the image is viewed according to the imaging conditions such as an orientation of the imaging device of the moving body 20 or a distance between the moving body 20 and the construction. Note that the user is preferably a person who is accustomed to steering the moving body 20.

Next, the user captures a video using the moving body 20 (Step S103). More specifically, the user controls a flight of the moving body 20 and an orientation of the imaging device by manual operation to capture an impressive video, such that the video is captured by the imaging device of the moving body 20.

At this time, the user may cause any known type of mobile terminal such as a tablet terminal to display a two-dimensional map screen together with a video that is being captured by the imaging device included in the moving body 20, thereby displaying a route along which the moving body 20 is flying. Further, the user may set a waypoint in the route on the basis of a predetermined rule. Thus, the user can set the waypoint while checking the video that is being captured.

Next, the user checks the video captured in Step S103 (Step S105). In a case where the flight of the moving body 20 and the orientation of the imaging device have been controlled as intended (Step S107: YES), the process proceeds to Step S109. On the other hand, in a case where the flight of the moving body 20 and the orientation of the imaging device have not been controlled as intended (Step S107: NO), the process returns to Step S103.

Even though the flight of the moving body 20 and the orientation of the imaging device have been controlled as intended (Step S107: YES), in a case where the imaging device fails to capture an impressive video as intended because, for example, there has been a timing at which the sun is hidden or an unintended person has crossed in front of the imaging device (Step S109: NO), the process returns to Step S103. On the other hand, in a case where an impressive video has been captured as intended (Step S109: YES), the imaging method illustrated in FIG. 25 ends.

The method of capturing a video by manual operation has been described above. According to such a method, in order to obtain an intended video, it is necessary to repeatedly reproduce the same flight of the moving body 20 and the same orientation of the imaging device by manual operation. Therefore, a lot of effort and time are required to obtain a desired video, and a lot of manpower is needed every time a video is captured.

### <<4.2. Automatic Flight-Based Imaging Method>>

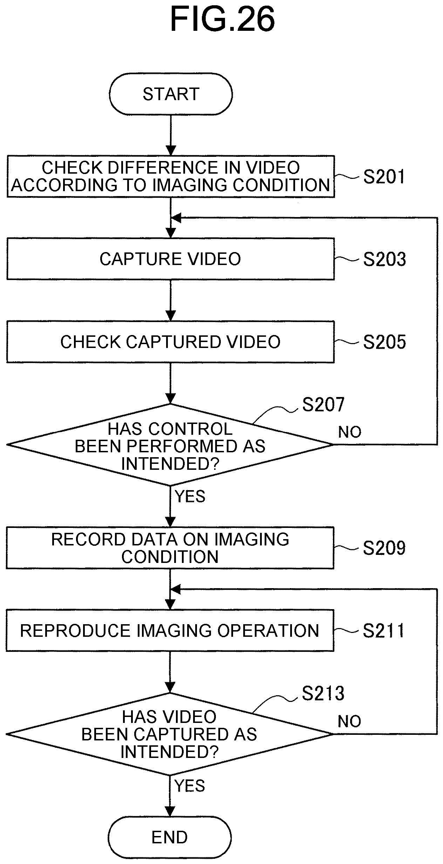

Next, a method in which, while the moving body 20 is caused to automatically fly, the imaging device captures a video will be described with reference to FIG. 26. FIG. 26 is a flowchart illustrating a method of causing the imaging device to capture a video by causing the moving body 20 to automatically fly. Hereinafter, the description will be given in line with the flowchart illustrated in FIG. 26.

First, processing in Steps S201 to S207 is performed. Since the processing in Steps S201 to S207 is substantially the same as that in Steps S101 to S107, the description thereof is omitted here.

In a case where the flight of the moving body 20 and the orientation of the imaging device have been controlled as intended (Step S207: YES), data on the imaging conditions is stored (Step S209). More specifically, when the flight of the moving body 20 and the orientation of the imaging device have been controlled as intended, various imaging conditions such as a position, a speed, and an imaging device orientation of the moving body 20 during flight are recorded. The imaging conditions are recorded in any know type of recording medium or the like included in the moving body 20. Note that information regarding the position, the speed, or the like of the moving body 20 is acquired by a GPS, an IMU, or the like included in the moving body 20.

Next, an imaging operation is reproduced (Step S211). More specifically, the flight of the moving body 20 and the orientation of the imaging device are automatically reproduced on the basis of the imaging conditions recorded in Step S209. A video captured at this time is checked by the user.

In a case where the video has not been captured as intended (Step S213: NO), the process returns to Step S211, and the imaging operation is reproduced again. On the other hand, in a case where the video has been captured as intended (Step S213: YES), for example, when daylight conditions and the like are met, the capturing of the image illustrated in FIG. 26 ends.

The automatic flight-based imaging method has been described above. According to such a method, the user does not need to manually operate the same moving body 20, and thus, the burden on the user is reduced.

Note that, on the basis of the data recorded in Step S209, a map can be displayed on a display screen of, for example, a tablet terminal or the like to depict a virtual route of the moving body 20 on the map, such that the virtual route is minutely adjusted. However, in a case where the virtual route is displayed on a two-dimensional map screen, it is difficult to intuitively adjust, for example, an altitude in the virtual route.

Furthermore, since the self-position of the moving body 20 is calculated using a global positioning system (GPS), an IMU, or the like, an error of about 50 cm to 1 m occurs in its position relative to a construction or the like, depending on the GPS.

### <<4.3. Imaging Method Using Map Displayed on Display Screen of Terminal>>

In the above-described methods, the user needs to go to a site where the moving body 20 actually flies in order to steer the moving body 20 and set waypoints. At that point, a method may be considered in which a route along which the moving body 20 flies is designated in advance using a map or the like displayed on a display screen of a tablet terminal or the like, such that the moving body 20 flies along the designated route.

More specifically, while a map is displayed on a display screen of, for example, a tablet terminal, the user sets waypoints by touching the display screen. Note that a position of a waypoint may be set on the basis of longitude and latitude. At this time, the user may set a speed and an altitude of the moving body 20 at a designated waypoint. Further, the user can also set an orientation of the moving body 20 at a designated waypoint. For example, the moving body 20 can be set to be oriented in a traveling direction.

A plurality of waypoints are set in the same manner, and a route of the moving body 20 is set by connecting the waypoints to one another. The user can record or transmit information indicating the set route in or to the moving body 20, such that the imaging device captures a video while the moving body 20 flies along the set route.

According to such a method, the user can set a route along which the moving body 20 flies before going to a site where the moving body 20 flies. Therefore, the user can set a route along which the moving body 20 flies while staying at an office, home, or the like. However, it cannot be seen what video will be captured by the imaging device of the moving body 20 until the moving body 20 actually flies and the imaging device captures the video. Further, in a case where a position of a waypoint has been corrected, it cannot be seen how a video to be captured by the imaging device will change, unless the moving body 20 actually flies and the imaging device captures the video.

In addition, the method in which the waypoints are set by touching the map displayed on the display screen is convenient in a case where the moving body 20 roughly flies in a wide range. However, in a case where the imaging device of the moving body 20 dynamically captures an image around a construction, it is considered difficult to minutely set a route and the like of the moving body 20. Furthermore, since the two-dimensional map is displayed on the display screen, it is necessary to set an altitude of the moving body 20 as a numerical value, and thus, it is not possible to intuitively set a waypoint.

### <<4.4. Imaging Method According to Present Disclosure>>

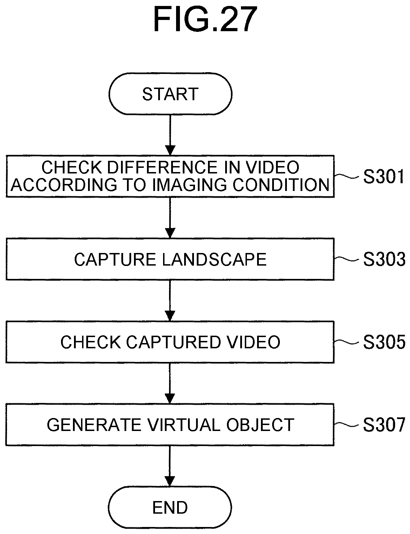

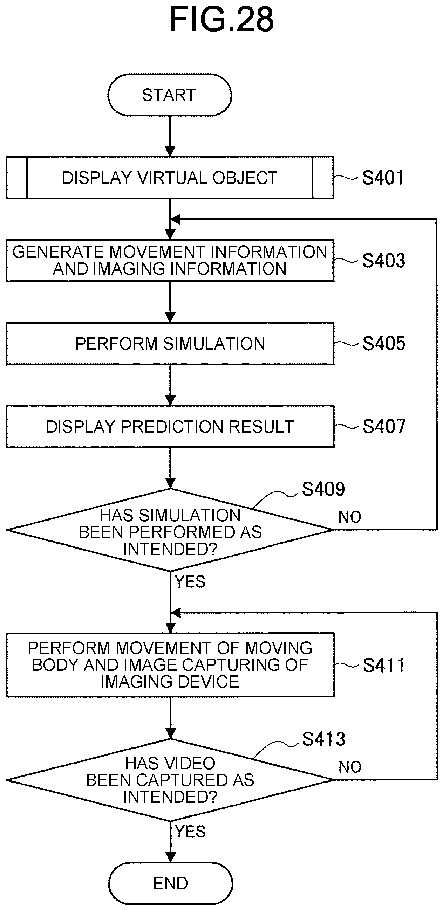

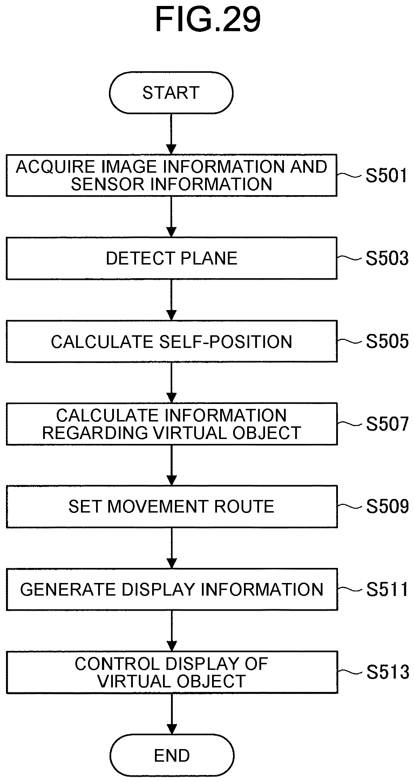

Next, an imaging method according to the present disclosure will be described with reference to FIGS. 27 to 29. FIG. 27 is a flowchart illustrating a procedure until a virtual object is generated. In addition, FIG. 28 is a flowchart illustrating a procedure until a video is captured on the basis of generated movement information and imaging information. In addition, FIG. 29 is a diagram illustrating displaying processing by the information processing apparatus 100. Hereinafter, the imaging method according to the present disclosure will be described with reference to FIGS. 27 to 29. In the following description, FIGS. 2 to 24, which have been described above, will be appropriately referred to.

An operation of the user in Step S301 illustrated in FIG. 27 is substantially the same as that in Step S101. However, in the imaging method according to the present disclosure, the user steering the moving body 20 may be a person who is not accustomed to steering the moving body 20.

Next, the user causes the imaging device of the moving body 20 to capture a video (Step S303). The user causes the imaging device of the moving body 20 to capture an image of a subject on which a virtual object is based. At this time, the user may control a flight of the moving body 20 and an orientation of the imaging device by manual operation to capture an impressive video, such that the video is captured by the imaging device of the moving body 20. For example, the user may cause the moving body 20 to turn around the tower 420 as illustrated in FIG. 4 such that the imaging device 206 captures a video. At this time, it is assumed that the imaging device 206 captures a video including the tower 420 and the forest 430.

Next, the user checks the captured video (Step S305). More specifically, the user checks that the video captured by the imaging device 206 is an intended video.

Next, a virtual object is generated (Step S307). More specifically, information regarding a three-dimensional virtual object is generated using various known CG technologies on the basis of information such as the image captured in Step S303, and the position and the posture of the moving body 20 and the orientation of the imaging device 206 at the time of capturing the image. For example, information regarding the virtual object 422 of the tower illustrated in FIG. 5 and the virtual object 432 of the forest illustrated in FIG. 6 is generated.

Note that, in the processing for generating a three-dimensional virtual object on the basis of the captured image, more accurate values of the position and the posture of the moving body 20 may be calculated not only by using the GPS and the IMU but also through bundle adjustment. Accordingly, a position or a posture of the moving body 20 relative to an environment such as a construction is more accurately calculated. Here, the bundle adjustment is a method of estimating various parameters with high accuracy from an image. The information regarding the virtual object generated at this time is recorded in the storage unit 180 included in the user terminal 10. At this time, information regarding the route 402 and the waypoints 406 along which the moving body 20 has moved as illustrated in FIG. 7 may be recorded in the storage unit 180.

The processing until the virtual object is generated has been described above with reference to FIG. 27. Next, a procedure until a desired video is captured will be described with reference to FIGS. 28 and 29. Note that processing in Steps S401 to S405 illustrated in FIGS. 28 and 29 is mainly performed by the information processing apparatus 100 according to an embodiment of the present disclosure.

The information processing apparatus 100 performs processing for displaying a virtual object (Step S401). The processing for displaying a virtual object will be described with reference to FIG. 29. FIG. 29 is a flowchart illustrating the processing for displaying a virtual object. Hereinafter, the processing for displaying a virtual object will be described in line with the flowchart illustrated in FIG. 29. The processing illustrated in FIG. 29 is executed, for example, when the start button 602 displayed on the display screen 610 of the user terminal 10a is touched as described with reference to FIG. 8.

First, the acquisition unit 140 acquires image information and sensor information (Step S501). More specifically, the acquisition unit 140 acquires image information including the desk 500 imaged by the imaging unit 110. In addition, the acquisition unit 140 acquires IMU information or information on the distance from the user terminal 10a to the desk 500, or the like detected by the sensor unit 120. The acquisition unit 140 transmits the acquired image information and distance information to the detection unit 151 included in the processing unit 150. In addition, the acquisition unit 140 transmits the acquired image information, distance information, and IMU information to the self-position calculation unit 154 included in the processing unit 150.

Next, the plane detection unit 152 detects a plane on the basis of the image information and the distance information transmitted from the acquisition unit 140 (Step S503). Here, the plane detection unit 152 detects a flat plane 506 on the desk 500. The plane detection unit 152 transmits a detection result to the virtual object calculation unit 155.

Next, the self-position calculation unit 154 calculates a self-position of the user terminal 10 on the basis of the image information, the distance information, and the IMU information (Step S505). More specifically, the self-position calculation unit 154 calculates a position and a posture of the user terminal 10 with respect to the desk 500 or an environment on the periphery thereof. The self-position calculation unit 154 transmits a calculation result to the virtual object calculation unit 155.

Next, the virtual object calculation unit 155 calculates a position, an orientation, a scale, and the like of a virtual object to be arranged on the basis of the calculation result of the self-position calculation unit 154 and the information regarding the virtual object recorded in the storage unit 180 (Step S507). The virtual object calculation unit 155 transmits a calculation result to the movement information generation unit 157.

Next, the movement information generation unit 157 sets a route of the moving body 20 on the basis of the calculation result of the virtual object calculation unit 155 and the waypoint information recorded in the storage unit 180 (Step S509). For example, the movement information generation unit 157 sets a virtual route to turn around the virtual object arranged on the desk 500. The movement information generation unit 157 transmits information on the set virtual route to the display information generation unit 159.

Next, the display information generation unit 159 generates display information (Step S511). More specifically, the display information generation unit 159 generates display information for displaying the virtual route of the moving body 20 around the virtual object arranged on the desk 500, and transmits the generated display information to the display control unit 170.

Next, the display control unit 170 controls a display of the display unit 175 so that an image of the virtual route around the virtual object arranged on the desk 500 is displayed (Step S513). Accordingly, an image 612 of the virtual object 422 of the tower on the desk 500 existing before the eyes of the user and an image 614 of the virtual route that turns therearound are displayed on the display screen of the display unit 175.

The processing for displaying a virtual object has been described above with reference to FIG. 29. Next, referring back to FIG. 28, the imaging method according to the present disclosure will be described.

The information processing apparatus 100 generates movement information and imaging information (Step S403). For example, as described with reference to FIGS. 9 to 22, movement information such as waypoints and imaging information such as an orientation and a zoom factor of the imaging device are generated on the basis of the operation by the user to move the user terminal 10, and the generated information is transmitted to the prediction unit 160. Here, processing of the information processing apparatus 100 in the operation described with reference to FIGS. 9 to 22 will be described.

### (Processing for Adjusting Preset Waypoint)

Here, processing of the information processing apparatus 100 in the processing for adjusting a waypoint as described with reference to FIGS. 9 to 12 will be described. As illustrated in FIG. 9, when the user U2 touches the image 616a of the waypoint displayed on the display screen 610a, the input unit 130 transmits, to the movement information generation unit 157, input information indicating that the waypoint 408a corresponding to the image 616a of the waypoint has been selected.

Next, as illustrated in FIGS. 11 and 12, when the user U2 pulls the user terminal 10 toward the user U2, the sensor unit 120 detects the movement of the user terminal 10 and transmits the detected sensor information to the self-position calculation unit 154. The self-position calculation unit 154 calculates a position and a posture of the user terminal 10 on the basis of the sensor information. The self-position calculation unit 154 transmits a calculation result to the movement information generation unit 157.

Next, the movement information generation unit 157 corrects the virtual route of the moving body 20 so that the position of the selected waypoint 408a is displaced as much as a distance by which the user terminal 10 has moved. Accordingly, information regarding the new virtual route is generated as movement information and transmitted to the prediction unit 160.

### (Processing for Newly Setting Waypoint)

Next, processing performed by the information processing apparatus 100 in the operation described with reference to FIG. 13 or 14 will be described. The acquisition unit 140 acquires, from the input unit 130, input information based on an operation on the display screen 610 by the user. In addition, the acquisition unit 140 acquires image information from the imaging unit 110, and distance information and IMU information from the sensor unit 120. The acquisition unit 140 transmits the acquired information to the processing unit 150.

The self-position calculation unit 154 calculates a self-position of the user terminal 10 on the basis of the transmitted sensor information, distance information, or the like, and transmits a calculation result to the generation unit 156. The movement information generation unit 157 specifies a position of a waypoint on the basis of the calculation result, the input information, and the like. The movement information generation unit 157 sets a virtual route of the moving body 20 by connecting a plurality of specified waypoints to one another, and transmits the virtual route to the prediction unit 160 as movement information.

### (Process for Setting Waypoint Using Designation Bar)

Next, processing of the information processing apparatus 100 when the waypoint is set using the designation bar 620 as described with reference to FIGS. 19 and 20 will be described. First, the acquisition unit 140 acquires IMU information and sensor information from the sensor unit 120. Further, the acquisition unit 140 acquires image information from the imaging unit 110 and transmits the image information to the object detection unit 153.

The object detection unit 153 detects a designation object 622 included in an image on the basis of the image information. Further, the object detection unit 153 detects, for example, a distance and a direction from the imaging unit 110 to the designation object 622 on the basis of the sensor information, and transmits a detection result to the generation unit 156.

The movement information generation unit 157 specifies a position of the designation object 622 on the basis of the detection result of the object detection unit 153, and sets the position as a waypoint. The movement information generation unit 157 sets a virtual route by connecting a plurality of set waypoints to one another, and transmits the virtual route to the prediction unit 160 as movement information.

### (Processing for Setting Orientation of Imaging Device)

Next, processing of the information processing apparatus 100 when the orientation of the imaging device is set as described with reference to FIG. 21 will be described. The self-position calculation unit 154 calculates a posture of the user terminal 10 on the basis of the sensor information, and transmits a calculation result to the generation unit 156. The imaging information generation unit 158 sets an orientation of the imaging device on the basis of the calculated posture. The imaging information generation unit 158 transmits the set orientation of the imaging device to the prediction unit 160 as direction information.

### (Processing for Setting Angle of View of Imaging Device)

Next, processing of the information processing apparatus 100 when the angle of view of the imaging device is set as described with reference to FIG. 22 will be described.

The imaging information generation unit 158 acquires, from the input unit 130, input information indicating that a pinch-in operation or a pinch-out operation has been performed by the user. The imaging information generation unit 158 generates angle-of-view information indicating an angle of view of the imaging device on the basis of the input information, and transmits the angle-of-view information to the prediction unit 160.

Next, the information processing apparatus 100 performs a simulation of a movement of the moving body 20 and a video to be captured by the imaging device (Step S405). For example, the prediction unit 160 simulates a movement of the moving body 20 on the display screen 611. Specifically, the movement prediction unit 161 predicts a movement of the moving body 20 on the basis of the movement information, and transmits a prediction result to the display information generation unit 159.

Furthermore, the prediction unit 160 simulates a video to be captured. More specifically, the imaging prediction unit 162 predicts a video to be captured by the moving body 20 on the basis of the movement information and the imaging information, and transmits a prediction result to the display information generation unit 159.

Next, the display unit 175 displays the prediction result (Step S407). More specifically, the display information generation unit 159 generates display information for displaying the prediction result on the basis of the prediction result, and transmits the display information to the display control unit 170. The display control unit 170 controls a display of the display unit 175 so that the display unit 175 displays the prediction result on the basis of the display information. Accordingly, the prediction result is displayed on the display unit 175. More specifically, the prediction result of the movement of the moving body 20 as illustrated in FIG. 23 or the prediction result of the video to be captured by the imaging device of the moving body 20 as illustrated in FIG. 24 is displayed.

Next, in a case where the simulation has been performed as intended (Step S409: YES), the process proceeds to Step S411. At this time, the storage unit 180 may store the movement information and the imaging information that have been used for the simulation. On the other hand, when the simulation has not been performed as intended (Step S409: NO), the process returns to Step S403.

Next, movement of the moving body 20 and image capturing by the imaging device are performed (Step S411). For example, the virtual route of the moving body 20 formed in Step S403 is converted into a real route along which the moving body 20 actually moves by being converted into a coordinate system of a real space by the movement information generation unit 157. Information regarding the real route is transmitted to the moving body 20 by the communication control unit 190. While the moving body 20 is flying along the generated real route, the imaging device images a landscape on the basis of the imaging information.

In a case where an impressive video as intended has been captured (Step S413: YES), the imaging processing illustrated in FIG. 28 ends. On the other hand, in a case where an impressive video as intended has not been captured (Step S413: NO), the process returns to Step S411.

### <5. Effects>

The imaging method according to the present disclosure has been described above. The information processing apparatus 100 according to the present disclosure controls a display of a virtual object based on an object existing in a real space on a display screen, and generates movement information for controlling a movement of a moving body. Accordingly, in a case where a user desires to cause the moving body 20 such as a drone to fly around the object existing in the real space, on which the virtual object is based, the user can designate a route of the moving body 20 while viewing the virtual object. Therefore, the information processing apparatus 100 according to the present embodiment can more intuitively generate movement information for controlling a movement of the moving body 20.

In addition, in the information processing apparatus 100 according to the present embodiment, the movement information generation unit 157 generates the movement information on the basis of an operation by the user U2 viewing the display screen 610. The user U2 can designate movement information such as a route of the moving body 20 while viewing the virtual object displayed on the display screen 610. Therefore, it is possible to more intuitively generate movement information for controlling a movement of the moving body 20.

In addition, in the present embodiment, as illustrated in FIGS. 9, 11, etc., the display of the display screen 610 includes an image 614 of the virtual route of the moving body 20. Therefore, it becomes easier for the user U2 to imagine a route of the moving body 20.

In addition, in the present embodiment, an image 616 of at least one waypoint (adjustment portion) for adjusting the route of the moving body 20 is displayed in at least a part of the image 614 of the virtual route displayed on the display screen 610. The movement information generation unit 157 generates movement information on the basis of an operation for moving the image 616 of the waypoint. Therefore, the user U2 can designate a route of the moving body 20 only by moving the image 616 of the waypoint as a marker of the route, thereby making it possible to more intuitively generate movement information for controlling a movement of the moving body 20.

In addition, in the present embodiment, as described with reference to FIG. 13, the movement information generation unit 157 shifts a position of the waypoint 408 on the basis of an operation for shifting a position of the display screen 610. Therefore, the user can more intuitively designate a route of the moving body 20.

In addition, in the present embodiment, the image 612 of the virtual object is displayed to be superimposed on an image captured by an imaging unit 110 included in a user terminal 10. Accordingly, the user U2 can recognize the virtual object 422a as if it existed in the real space. Therefore, the user U2 can more intuitively designate a route of the moving body 20. In addition, by matching a viewpoint of the imaging unit 110 with a waypoint, an image captured at the waypoint can be displayed on the display screen. Therefore, when the waypoint has changed in position, it is also possible to predict in advance how an image to be captured will change.

In addition, in the present embodiment, as described with reference to FIGS. 15 to 18, the movement information generation unit 157 generates the movement information on the basis of an operation by the user U2 for shifting a viewpoint of the imaging unit 110. More specifically, the movement information generation unit 157 generates the movement information on the basis of a predetermined shift of the viewpoint in position. The display screen 610 includes an image captured by the imaging unit 110. Therefore, when the moving body 20 actually moves, it becomes easier for the user U2 to imagine a landscape to be captured by the imaging device included in the moving body 20, thereby making it possible to cause the imaging device included in the moving body 20 to capture a more desired video.

Note that the route of the moving body 20 may be a route from the viewpoint of the imaging unit 110 as described with reference to FIGS. 15 and 16. In addition, the route of the moving body 20 may be positioned away from the viewpoint of the imaging unit 110 by a predetermined distance. For example, as described with reference to FIG. 17, a position away forward from the viewpoint of the imaging unit 110 by a distance d and lower than an optical axis of the imaging unit 110 within an angle of view may be designated as the route of the moving body 20. In this case, as illustrated in FIG. 18, the waypoint or the like is displayed on the display screen 610g, such that the user U2 can more intuitively designate a route of the moving body 20.

In addition, in the present embodiment, as described with reference to FIGS. 19 and 20, the movement information generation unit 157 generates the movement information on the basis of an operation for moving a designation object designating a route of the moving body 20. More specifically, in the present embodiment, the route of the moving body 20 is designated on the basis of a route along which the designation object 622 provided at a tip of a designation bar 620 has moved. Thus, the user can designate a route of the moving body 20 by a simple operation for moving the designation object 622. In addition, as illustrated in FIG. 20, an image 616 of the designation object 622 is displayed on the display screen 610h. Accordingly, the user U2 can recognize a position of the designation object 622 via the display screen 610h. Therefore, it becomes easier for the user U2 to imagine a route of the moving body 20.

In addition, in the present embodiment, the moving body 20 includes an imaging device. The imaging device captures a landscape around the moving body 20. In addition, the information processing apparatus 100 according to the present embodiment includes an imaging information generation unit 158 generating imaging information for controlling an imaging range of the imaging device included in the moving body 20 on the basis of an operation of the user. Therefore, the user can designate an imaging range of the imaging device included in the moving body 20 on the basis of various operations, thereby making it possible to cause the imaging device of the moving body 20 to capture a more appropriate video.

Furthermore, in the present embodiment, the imaging information generation unit 158 generates direction information regarding an imaging direction of the imaging device included in the moving body 20 as the imaging information. Therefore, the user can cause the imaging device of the moving body 20 to capture a more appropriate video.

In addition, in the present embodiment, an image captured by the imaging unit 110 is displayed on the display screen. In addition, as described with reference to FIG. 21, the imaging information generation unit 158 generates the direction information on the basis of an operation for shifting an orientation of the imaging unit 110. Therefore, the user can generate direction information while guessing a video to be captured by the imaging device of the moving body 20, thereby making it possible to cause the imaging device to capture a more appropriate video.

In addition, in the present embodiment, the imaging information generation unit 158 can generate angle-of-view information for controlling an angle of view of the imaging device of the moving body 20 as the imaging information on the basis of a pinch-out operation or a pinch-in operation on the display screen by the user U2. Therefore, the user can easily designate an imaging range of the imaging device of the moving body 20.

In addition, in the present embodiment, the information processing apparatus 100 further includes a movement prediction unit 161 predicting a movement of the moving body 20 on the basis of the movement information. More specifically, the movement prediction unit 161 can simulate a movement of the moving body 20. Therefore, the user can check a route of the moving body 20 in advance on the basis of the simulation of the movement of the moving body 20. In the present embodiment, as described with reference to FIG. 23, a result of simulating the movement of the moving body 20 (that is, a prediction result) is displayed on the display screen 611. Therefore, the user can more easily check a route of the moving body 20 by viewing the display screen 611.

In addition, in the present embodiment, the information processing apparatus 100 further includes an imaging prediction unit 162 predicting an image to be captured by the imaging device of the moving body 20 on the basis of the movement information and the imaging information. In the present embodiment, the imaging prediction unit 162 can simulate an image to be captured by the imaging device. The user can check an image to be captured on the basis of a result of the simulation. In addition, in the present embodiment, as described with reference to FIG. 24, the result of the simulation by the imaging prediction unit 162 is displayed on the display screen 610k. Therefore, the user can easily check a prediction result of the imaging prediction unit 162.

In addition, in the present embodiment, the moving body 20 is three-dimensionally movable. Accordingly, the user can three-dimensionally designate a route of the moving body 20. Therefore, the user can more intuitively generate movement information for controlling a movement of the moving body 20.

Furthermore, according to the present embodiment, once the route of the moving body 20 is set, it is possible to cause the moving body 20 to fly along the same route repeatedly without manpower, or cause the imaging device to capture similar videos repeatedly.

### <6. Hardware Configuration>

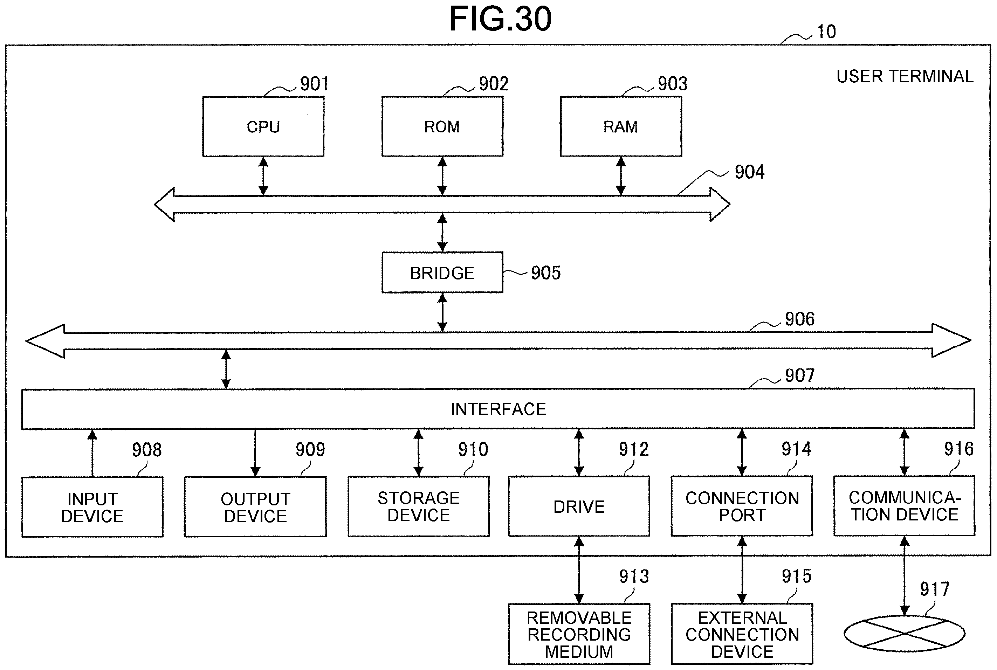

Next, an example of a hardware configuration of the user terminal 10 constituting the information processing system 1 according to an embodiment of the present disclosure, such as the user terminal 10 described above, will be described in detail with reference to FIG. 30.

FIG. 30 is a functional block diagram illustrating a configuration example of a hardware configuration of the user terminal 10 constituting the information processing system 1 according to an embodiment of the present disclosure.

The user terminal 10 constituting the information processing system 1 according to the present embodiment mainly includes a CPU 901, a ROM 902, and a RAM 903. In addition, the user terminal 10 further includes a host bus 904, a bridge 905, an external bus 906, an interface 907, an input device 908, an output device 909, a storage device 910, a drive 912, a connection port 914, and a communication device 916.

The CPU 901 functions as an arithmetic processing device and a control device, and controls an overall operation or a partial operation in the user terminal 10 in accordance with various programs recorded in the ROM 902, the RAM 903, the storage device 910, or a removable recording medium 913. The ROM 902 stores programs, operation parameters, and the like used by the CPU 901. The RAM 903 primarily stores programs used by the CPU 901, parameters appropriately changing when executing the programs, and the like. They are connected to each other by the host bus 904 configured as an internal bus such as a CPU bus. For example, the acquisition unit 140, the processing unit 150 (each functional unit illustrated in FIG. 3), the display control unit 170, and the communication control unit 190 illustrated in FIG. 2 can be configured by the CPU 901.

The host bus 904 is connected to the external bus 906 such as a peripheral component interconnect/interface (PCI) bus via the bridge 905. In addition, the input device 908, the output device 909, the storage device 910, the drive 912, the connection port 914, and the communication device 916 are connected to the external bus 906 via the interface 907.

The input device 908 is an operation means operated by the user, for example, a mouse, a keyboard, a touch panel, a button, a switch, a lever, a pedal, or the like. Alternatively, the input device 908 may be, for example, a remote control means (so-called remote controller) using infrared rays or other radio waves, or an external connection device 915 such as a mobile phone or a PDA corresponding to an operation of the user terminal 10. In addition, the input device 908 includes an input control circuit or the like generating an input signal on the basis of information input by the user, for example, using the above-described operation means and outputting the input signal to the CPU 901. By operating the input device 908, the user of the user terminal 10 can input various kinds of data to the user terminal 10 and give processing operation instructions.

The output device 909 includes a device capable of visually or auditorily notifying the user of acquired information. Examples of such a device include display devices such as a CRT display device, a liquid crystal display device, a plasma display device, an EL display device, and a lamp, audio output devices such as a speaker and a headphone, printer devices, and the like. The output device 909 outputs, for example, results obtained by various types of processing performed by the user terminal 10. Specifically, the display device displays the results obtained by various types of processing performed by the user terminal 10 as a text or an image. On the other hand, the audio output device converts an audio signal including reproduced audio data, acoustic data, or the like into an analog signal and outputs the analog signal.

The storage device 910 is a data storage device configured as an example of the storage unit of the user terminal 10. The storage device 910 includes, for example, a magnetic storage device such as a hard disk drive (HDD), a semiconductor storage device, an optical storage device, a magneto-optical storage device, or the like. The storage device 910 stores programs executed by the CPU 901, various kinds of data, and the like. For example, the storage unit 180 illustrated in FIG. 2 can be configured by the storage device 910.

The drive 912 is a reader/writer for a recording medium, and is built in or externally attached to the user terminal 10. The drive 912 reads out information recorded on the mounted removable recording medium 913 such as a magnetic disk, an optical disk, a magneto-optical disk, or a semiconductor memory, and outputs the information to the RAM 903. Furthermore, the drive 912 can also write a record on the mounted removable recording medium 913 such as a magnetic disk, an optical disk, a magneto-optical disk, or a semiconductor memory. The removable recording medium 913 is, for example, a DVD medium, an HD-DVD medium, a Blu-ray (registered trademark) medium, or the like. Alternatively, the removable recording medium 913 may be a compact flash (CF) (registered trademark), a flash memory, a secure digital (SD) memory card, or the like. Alternatively, the removable recording medium 913 may be, for example, an integrated circuit (IC) card on which a non-contact IC chip is mounted, an electronic device, or the like.

The connection port 914 is a port for direct connection to the user terminal 10. Examples of the connection port 914 include a universal serial bus (USB) port, an IEEE 1394 port, a small computer system interface (SCSI) port, and the like. Other examples of the connection port 914 include an RS-232C port, an optical audio terminal, a high-definition multimedia interface (HDMI) (registered trademark) port, and the like. By connecting the external connection device 915 to the connection port 914, the user terminal 10 directly acquires various kinds of data from the external connection device 915 or provide various kinds of data to the external connection device 915.

The communication device 916 is, for example, a communication interface including a communication device or the like for connection to a communication network (network) 917. The communication device 916 is, for example, a communication card or the like for wired or wireless local area network (LAN), Bluetooth (registered trademark), or wireless USB (WUSB). Alternatively, the communication device 916 may be a router for optical communication, a router for asymmetric digital subscriber line (ADSL), any type of modem for communication, or the like. For example, the communication device 916 can transmit and receive signals and the like to and from the Internet and other communication devices according to a predetermined protocol such as TCP/IP. In addition, the communication network 917 connected to the communication device 916 includes a network or the like connected in a wired or wireless manner, and may be, for example, the Internet, a home LAN, infrared communication, radio wave communication, satellite communication, or the like.

An example of the hardware configuration capable of implementing the functions of the user terminal 10 constituting the information processing system 1 according to an embodiment of the present disclosure has been described above. Each of the above-described components may be configured using a general-purpose member, or may be configured by hardware specific to the functions of each component. Therefore, it is possible to appropriately change the hardware configuration to be used according to the technical level at the time of carrying out the present embodiment. Note that, although not illustrated in FIG. 30, it is obvious that various components corresponding to the user terminal 10 constituting the information processing system 1 are included.

Note that a computer program for implementing each function of the user terminal 10 constituting the information processing system 1 according to the present embodiment as described above can be created and installed on a personal computer or the like. In addition, a computer-readable recording medium storing such a computer program can also be provided. The recording medium is, for example, a magnetic disk, an optical disk, a magneto-optical disk, a flash memory, or the like. Furthermore, the above-described computer program may be distributed, for example, via a network without using a recording medium. In addition, the number of computers executing the computer program is not particularly limited. For example, the computer program may be executed by a plurality of computers (for example, a plurality of servers or the like) in cooperation with each other.

### <7. Supplement>

Although the preferred embodiments of the present disclosure have been described in detail with reference to the accompanying drawings, the technical scope of the present disclosure is not limited thereto. It is obvious to a person having ordinary knowledge in the technical field of the present disclosure that various changes or modifications can be made within the scope of the technical idea set forth in the claims, and it is of course to be understood that the changes or modifications also fall within the technical scope of the present disclosure.

For example, in the above-described embodiment, the user U1 causes the moving body 20 to fly in advance so that the imaging device 206 mounted on the moving body 20 captures an image for generating a virtual object, but the present technology is not limited thereto. For example, in a case where a virtual object has been generated in any method, for example, in a case where a virtual object has been generated on the basis of an image captured by a user other than the user U1 using the moving body 20 in the past, the already-generated virtual object may be used.

In addition, the moving body 20 has been described as a drone in the above-described embodiment, but the moving body 20 may be any movable device. For example, the technology of the present disclosure can also be applied to any kind of aerial vehicle that can fly like the drone. Furthermore, the technology of the present disclosure can also be applied to a manipulator corresponding to a hand, an arm, or the like of a robot. In this case, the information processing apparatus may control, for example, a display of a virtual object to be handled by the manipulator on the display screen. In addition, the information processing apparatus can generate movement information for controlling a movement of the moving body using, for example, a fingertip of the manipulator as the moving body. Accordingly, it is possible to more intuitively generate movement information for controlling a movement of the fingertip or the like of the manipulator.

In addition, in the above-described embodiment, information regarding a virtual object, a waypoint, and the like is recorded in the information processing apparatus 100. Alternatively, the information regarding the virtual object, the waypoint, and the like may be recorded in various servers connected to the network. In this case, the information processing apparatus 100 can receive information recorded in an appropriate server via the network, and generate movement information, imaging information, and the like.

In addition, in the above-described embodiment, the description has been given assuming that the user terminal 10 is mainly a smartphone, a tablet terminal, or the like. Alternatively, the user terminal 10 may be a general-purpose personal computer (PC), a game machine, a robot, or a wearable device such as a head mounted display (HMD) or a smart watch.

In addition, the steps illustrated in the flowcharts according to the above-described embodiment include not only processing performed in a time-series manner according to the order as described therein, but also processing executed in parallel or individually although not necessarily performed in a time-series manner. Furthermore, it goes without saying that the order in which the steps are processed in a time-series manner can also be appropriately changed if necessary.

### Reference Signs List

- 10: USER TERMINAL
- 100: INFORMATION PROCESSING APPARATUS
- 110: IMAGING UNIT
- 120: SENSOR UNIT
- 130: INPUT UNIT
- 140: ACQUISITION UNIT
- 150: PROCESSING UNIT
- 151: DETECTION UNIT
- 157: MOVEMENT INFORMATION GENERATION UNIT
- 158: IMAGING INFORMATION GENERATION UNIT
- 159: DISPLAY INFORMATION GENERATION UNIT
- 161: MOVEMENT PREDICTION UNIT
- 162: IMAGING PREDICTION UNIT
- 170: DISPLAY CONTROL UNIT
- 175: DISPLAY UNIT
- 20: MOVING BODY
- 202: AIRFRAME
- 204: PROPELLER
- 206: IMAGING DEVICE
- 402: ROUTE
- 404: VIRTUAL ROUTE
- 406, 408, 410, 412: WAYPOINT
- 422, 432: VIRTUAL OBJECT
- 610: DISPLAY SCREEN
- 612: IMAGE OF VIRTUAL OBJECT
- 614: IMAGE OF VIRTUAL ROUTE
- 616: IMAGE OF WAYPOINT
- 622: DESIGNATION OBJECT

## Claims

1. An information processing apparatus (100) for implementing functions of a user terminal (10), the information processing apparatus comprising:
a display control unit (170) that controls display of a virtual object (422, 432) on a display screen (610) of the user terminal, the virtual object being based on an object (420, 430) existing in a real space; and
a movement information generation unit (157) that generates movement information, on the basis of an operation by a user viewing the display screen, for controlling a movement of a moving body (20) with respect to the object in the real space, the moving body being communicably connected to the user terminal,
wherein the display includes a route of the moving body, **characterized in that** at least one adjustment portion for adjusting the route is displayed in at least a part of the route, and the operation is an operation for shifting a position of the adjustment portion displayed on the display screen.

2. The information processing apparatus according to claim 1, wherein
the virtual object is displayed to be superimposed on an image captured by a first imaging device.

3. The information processing apparatus according to claim 2, wherein
the operation includes an operation for shifting a viewpoint of the first imaging device, and
the movement information generation unit generates the movement information on the basis of a shift of the viewpoint in predetermined position.

4. The information processing apparatus according to claim 1, wherein
the movement information generation unit generates the movement information on the basis of an operation for moving a designation object designating a route of the moving body.

5. The information processing apparatus according to claim 1, wherein
the moving body includes a second imaging device imaging a landscape, and
the information processing apparatus further comprises an imaging information generation unit that generates imaging information for controlling an imaging range of the second imaging device on the basis of an operation of a user.

6. The information processing apparatus according to claim 5, wherein
the imaging information generation unit generates direction information regarding an imaging direction of the second imaging device as the imaging information.

7. The information processing apparatus according to claim 6, wherein
an image captured by a first imaging device is displayed on the display screen, and
the imaging information generation unit generates the direction information on the basis of an operation for shifting an orientation of the first imaging device.

8. The information processing apparatus according to claim 5, wherein
the imaging information generation unit generates angle-of-view information for controlling an angle of view of the second imaging device as the imaging information on the basis of a pinch-out operation or a pinch-in operation on the display screen by the user.

9. The information processing apparatus according to claim 5, further comprising
an imaging prediction unit that predicts an image to be captured by the second imaging device on the basis of the movement information and the imaging information.

10. The information processing apparatus according to claim 1, further comprising
a movement prediction unit that predicts the movement of the moving body on the basis of the movement information.

11. An information processing method performed by a processor (150), comprising:
controlling display of a virtual object (422, 432) on a display screen (610) of a user terminal (10), the virtual object being based on an object (420, 430) existing in a real space; and
generating movement information, on the basis of an operation by a user viewing the display screen, for controlling a movement of a moving body (20) with respect to the object in the real space, the moving body being communicably connected to the user terminal,
wherein the display includes a route of the moving body, **characterized in that** at least one adjustment portion for adjusting the route is displayed in at least a part of the route, and the operation is an operation for shifting a position of the adjustment portion displayed on the display screen.

12. A program for causing a computer to realize:
a function of controlling a display of a virtual object (422, 432) on display screen (610) of a user terminal (10), the virtual object being based on an object (420, 430) existing in a real space; and
a function of generating movement information, on the basis of an operation by a user viewing the display screen, for controlling a movement of a moving body (20) with respect to the object in the real space, the moving body being communicably connected to the user terminal,
wherein the display includes a route of the moving body, **characterized in that** at least one adjustment portion for adjusting the route is displayed in at least a part of the route, and the operation is an operation for shifting a position of the adjustment portion displayed on the display screen.

## Patentansprüche

1. Informationsverarbeitungseinrichtung (100) zum Implementieren von Funktionen eines Benutzerendgeräts (10), wobei die Informationsverarbeitungseinrichtung umfasst:
eine Anzeigesteuereinheit (170), die die Anzeige eines virtuellen Objekts (422, 432) auf einem Anzeigebildschirm (610) des Benutzerendgeräts steuert, wobei das virtuelle Objekt auf einem in einem realen Raum vorhandenen Objekt (420, 430) basiert; und
eine Bewegungsinformationserzeugungseinheit (157), die auf der Grundlage einer Bedienung durch einen Benutzer, der den Anzeigebildschirm betrachtet, Bewegungsinformationen erzeugt, um eine Bewegung eines beweglichen Körpers (20) in Bezug auf das Objekt im realen Raum zu steuern, wobei der bewegliche Körper kommunikativ mit dem Benutzerendgerät verbunden ist,
wobei die Anzeige eine Route des bewegten Körpers einschließt, **dadurch gekennzeichnet, dass** mindestens ein Anpassungsabschnitt zum Anpassen der Route in mindestens einem Teil der Route angezeigt wird, und der Vorgang ein Vorgang zum Verschieben einer Position des auf dem Anzeigebildschirm angezeigten Anpassungsabschnitts ist.

2. Informationsverarbeitungseinrichtung nach Anspruch 1, wobei
das virtuelle Objekt angezeigt wird, um auf einem von einer ersten Bildgebungsvorrichtung aufgenommenen Bild überlagert zu werden.

3. Informationsverarbeitungseinrichtung nach Anspruch 2, wobei
der Vorgang einen Vorgang zum Verschieben eines Blickpunkts der ersten Bildgebungsvorrichtung einschließt, und
die Bewegungsinformationserzeugungseinheit die Bewegungsinformationen auf der Grundlage einer Verschiebung des Blickpunkts in einer vorgegebenen Position erzeugt.

4. Informationsverarbeitungseinrichtung nach Anspruch 1, wobei
die Bewegungsinformationserzeugungseinheit die Bewegungsinformationen auf der Grundlage eines Vorgangs zum Bewegen eines Bestimmungsobjekts, das eine Route des bewegten Körpers bestimmt, erzeugt.

5. Informationsverarbeitungseinrichtung nach Anspruch 1, wobei
der bewegte Körper eine zweite Bildgebungsvorrichtung einschließt, die eine Landschaft abbildet, und
die Informationsverarbeitungseinrichtung ferner eine Bildgebungsinformationserzeugungseinheit umfasst, die Bildgebungsinformationen zum Steuern eines Bildgebungsbereichs der zweiten Bildgebungsvorrichtung auf der Grundlage einer Bedienung eines Benutzers erzeugt.

6. Informationsverarbeitungseinrichtung nach Anspruch 5, wobei
die Bildgebungsinformationserzeugungseinheit Richtungsinformationen bezüglich einer Bildgebungsrichtung der zweiten Bildgebungsvorrichtung als Bildgebungsinformationen erzeugt.

7. Informationsverarbeitungseinrichtung nach Anspruch 6, wobei
ein von einer ersten Bildgebungsvorrichtung aufgenommenes Bild auf dem Anzeigebildschirm angezeigt wird, und
die Bildinformationserzeugungseinheit die Richtungsinformationen auf der Grundlage eines Vorgangs zum Verschieben einer Ausrichtung der ersten Bildgebungsvorrichtung erzeugt.

8. Informationsverarbeitungseinrichtung nach Anspruch 5, wobei
die Bildinformationserzeugungseinheit Blickwinkelinformationen zum Steuern eines Blickwinkels der zweiten Bildgebungsvorrichtung als Bildinformationen auf der Grundlage eines Pinch-out- oder Pinch-in-Vorgangs auf dem Anzeigebildschirm durch den Benutzer erzeugt.

9. Informationsverarbeitungseinrichtung nach Anspruch 5, ferner umfassend
eine Bildgebungsvorhersageeinheit, die auf der Grundlage der Bewegungsinformationen und der Bildgebungsinformationen ein von der zweiten Bildgebungsvorrichtung aufzunehmendes Bild vorhersagt.

10. Informationsverarbeitungseinrichtung nach Anspruch 1, ferner umfassend
eine Bewegungsvorhersageeinheit, die die Bewegung des bewegten Körpers auf der Grundlage der Bewegungsinformationen vorhersagt.

11. Informationsverarbeitungsverfahren, das durch einen Prozessor (150) ausgeführt wird, umfassend:
Steuern der Anzeige eines virtuellen Objekts (422, 432) auf einem Anzeigebildschirm (610) eines Benutzerendgeräts (10), wobei das virtuelle Objekt auf einem in einem realen Raum vorhandenen Objekt (420, 430) basiert; und
Erzeugen von Bewegungsinformationen auf der Grundlage eines Vorgangs durch einen Benutzer, der den Anzeigebildschirm betrachtet, zum Steuern einer Bewegung eines sich bewegenden Körpers (20) in Bezug auf das Objekt im realen Raum, wobei der sich bewegende Körper kommunikativ mit dem Benutzerendgerät verbunden ist,
wobei die Anzeige eine Route des bewegten Körpers einschließt, **dadurch gekennzeichnet, dass** mindestens ein Anpassungsabschnitt zum Anpassen der Route in mindestens einem Teil der Route angezeigt wird, und der Vorgang ein Vorgang zum Verschieben einer Position des auf dem Anzeigebildschirm angezeigten Anpassungsabschnitts ist.

12. Programm, zum Veranlassen eines Computers, zum Umsetzen von:
einer Funktion zum Steuern einer Anzeige eines virtuellen Objekts (422, 432) auf einem Anzeigebildschirm (610) eines Benutzerendgeräts (10), wobei das virtuelle Objekt auf einem Objekt (420, 430) basiert, das in einem realen Raum existiert; und
einer Funktion zum Erzeugen von Bewegungsinformationen auf der Grundlage eines Vorgangs durch einen Benutzer, der den Anzeigebildschirm betrachtet, zum Steuern einer Bewegung eines sich bewegenden Körpers (20) in Bezug auf das Objekt im realen Raum, wobei der sich bewegende Körper kommunikativ mit dem Benutzerendgerät verbunden ist,
wobei die Anzeige eine Route des bewegten Körpers einschließt, **dadurch gekennzeichnet, dass** mindestens ein Anpassungsabschnitt zum Anpassen der Route in mindestens einem Teil der Route angezeigt wird, und der Vorgang ein Vorgang zum Verschieben einer Position des auf dem Anzeigebildschirm angezeigten Anpassungsabschnitts ist.

## Revendications

1. Appareil de traitement d'informations (100) permettant d'implémenter des fonctions d'un terminal utilisateur (10), l'appareil de traitement d'informations comprenant :
une unité de commande d'affichage (170) qui commande l'affichage d'un objet virtuel (422, 432) sur un écran d'affichage (610) du terminal utilisateur, l'objet virtuel étant en fonction d'un objet (420, 430) existant dans un espace réel ; et
une unité de génération d'informations de déplacement (157) qui génère des informations de déplacement, en fonction d'une opération par un utilisateur visualisant l'écran d'affichage, permettant de commander un déplacement d'un corps en déplacement (20) par rapport à l'objet dans l'espace réel, le corps en déplacement étant connecté par communication au terminal utilisateur,
dans lequel l'affichage comporte un trajet du corps en déplacement, **caractérisé en ce qu'**au moins une portion d'ajustement permettant d'ajuster le trajet est affichée dans au moins une partie du trajet, et l'opération est une opération permettant de décaler une position de la portion d'ajustement affichée sur l'écran d'affichage.

2. Appareil de traitement d'informations selon la revendication 1, dans lequel
l'objet virtuel est affiché pour être superposé sur une image capturée par un premier dispositif d'imagerie.

3. Appareil de traitement d'informations selon la revendication 2, dans lequel
l'opération comporte une opération permettant de décaler un point de vue du premier dispositif d'imagerie, et
l'unité de génération d'informations de déplacement génère les informations de déplacement en fonction d'un décalage du point de vue dans une position prédéterminée.

4. Appareil de traitement d'informations selon la revendication 1, dans lequel
l'unité de génération d'informations de déplacement génère les informations de déplacement en fonction d'une opération permettant de déplacer un objet de désignation désignant un trajet du corps en déplacement.

5. Appareil de traitement d'informations selon la revendication 1, dans lequel
le corps en déplacement comporte un second dispositif d'imagerie imageant un paysage, et
l'appareil de traitement d'informations comprend en outre une unité de génération d'informations d'imagerie qui génère des informations d'imagerie permettant de commander une plage d'imagerie du second dispositif d'imagerie en fonction d'une opération d'un utilisateur.

6. Appareil de traitement d'informations selon la revendication 5, dans lequel
l'unité de génération d'informations d'imagerie génère des informations de direction concernant une direction d'imagerie du second dispositif d'imagerie en guise d'informations d'imagerie.

7. Appareil de traitement d'informations selon la revendication 6, dans lequel
une image capturée par un premier dispositif d'imagerie est affichée sur l'écran d'affichage, et
l'unité de génération d'informations d'imagerie génère les informations de direction en fonction d'une opération permettant de décaler une orientation du premier dispositif d'imagerie.

8. Appareil de traitement d'informations selon la revendication 5, dans lequel
l'unité de génération d'informations d'imagerie génère des informations d'angle de vue permettant de commander un angle de vue du second dispositif d'imagerie en guise d'informations d'imagerie en fonction d'une opération d'écartement ou d'une opération de pincement sur l'écran d'affichage par l'utilisateur.

9. Appareil de traitement d'informations selon la revendication 5, comprenant en outre
une unité de prédiction d'imagerie qui prédit une image à capturer par le second dispositif d'imagerie en fonction des informations de déplacement et des informations d'imagerie.

10. Appareil de traitement d'informations selon la revendication 1, comprenant en outre
une unité de prédiction de déplacement qui prédit le déplacement du corps en déplacement en fonction des informations de déplacement.

11. Procédé de traitement d'informations mis en œuvre par un processeur (150), comprenant :
la commande d'affichage d'un objet virtuel (422, 432) sur un écran d'affichage (610) d'un terminal utilisateur (10), l'objet virtuel étant en fonction d'un objet (420, 430) existant dans un espace réel ; et
la génération d'informations de déplacement, en fonction d'une opération par un utilisateur visualisant l'écran d'affichage, permettant de commander un déplacement d'un corps en déplacement (20) par rapport à l'objet dans l'espace réel, le corps en déplacement étant connecté par communication au terminal utilisateur,
dans lequel l'affichage comporte un trajet du corps en déplacement, **caractérisé en ce qu'**au moins une portion d'ajustement permettant d'ajuster le trajet est affichée dans au moins une partie du trajet, et l'opération est une opération permettant de décaler une position de la portion d'ajustement affichée sur l'écran d'affichage.

12. Programme permettant d'amener un ordinateur à réaliser :
une fonction de commande d'un affichage d'un objet virtuel (422, 432) sur un écran d'affichage (610) d'un terminal utilisateur (10), l'objet virtuel étant en fonction d'un objet (420, 430) existant dans un espace réel ; et
une fonction de génération d'informations de déplacement, en fonction d'une opération par un utilisateur visualisant l'écran d'affichage, permettant de commander un déplacement d'un corps en déplacement (20) par rapport à l'objet dans l'espace réel, le corps en déplacement étant connecté par communication au terminal utilisateur,
dans lequel l'affichage comporte un trajet du corps en déplacement, **caractérisé en ce qu'**au moins une portion d'ajustement permettant d'ajuster le trajet est affichée dans au moins une partie du trajet, et l'opération est une opération permettant de décaler une position de la portion d'ajustement affichée sur l'écran d'affichage.
